# EUROPEAN PATENT APPLICATION

(11) **EP 4 823 064 A1**
(43) Date of publication of application: **14.10.2026**
(21) Application number: 24911373.9
(22) Date of filing: 26.12.2024
(51) Int. Cl.: H04L 61/5092, H04L 61/5053

(54) **INTERFACE ADDRESS ALLOCATION METHOD AND DEVICE**

(30) Priority: 28.12.2023 CN 202311851417
(71) Applicant: Huawei Technologies Co., Ltd., Shenzhen, Guangdong 518129 (CN)
(72) Inventor: CHENG, Yiping, Shenzhen, Guangdong 518129 (CN); YIN, Yu, Shenzhen, Guangdong 518129 (CN); ZONG, Zaifeng, Shenzhen, Guangdong 518129 (CN)
(74) Representative: Isarpatent
(86) International application number: PCT/CN2024/142895
(87) International publication number: WO 2025/140452

(57) **Abstract**

This application provides an interface address allocation method and an apparatus, and relates to the field of communication technologies, to configure each network function NF interface in a distributed network. In the method, a service address allocation proxy function entity may request, by using a first message, a network management function entity to allocate an address to an interface, and the network management function entity may allocate an address to the interface based on the first message, and send address information to the service address allocation proxy function entity. After the service address allocation proxy function entity sends the address information to a service interface automation system, the service interface automation system can automatically generate an interface configuration of a first network function based on the received address information. In this way, an interface address can be automatically obtained and configured, and manual planning and configuration of an address for each interface can be avoided in an NF deployment phase, thereby improving efficiency of configuring an interface address, and implementing NF interface configuration in the distributed network.

## Description

This application claims priority to Chinese Patent Application No. 202311851417.4, filed with the China National Intellectual Property Administration on December 28, 2023 and entitled "INTERFACE ADDRESS ALLOCATION METHOD AND APPARATUS", which is incorporated herein by reference in its entirety.

### TECHNICAL FIELD

This application relates to the communication field, and in particular, to an interface address allocation method and an apparatus.

### BACKGROUND

6th generation mobile networks (6th generation mobile network, 6G) are evolving from centralized networks to distributed networks, such that the entire network are formed by a massive of distributed networks. Application scenarios of these distributed networks are gradually expanding from industrial application scenarios to life, sports, and entertainment scenarios. These new scenarios require the distributed networks to be quickly deployed, that is, a deployment time of the distributed network needs to be shortened from a month level to a day level, an hour level, or a minute level.

Deployment of the distributed networks involves network function (network function, NF) deployment, NF interface configuration, and other operations. Currently, NF interface configuration needs to be planned by an operator or a third party. However, this manner is possibly not applicable to various distributed networks. Therefore, how to configure NF interfaces in a distributed network is currently a hot topic of discussion.

### SUMMARY

Embodiments of this application provide an interface address allocation method and an apparatus, to configure an NF interface in a distributed network.

To achieve the foregoing objective, this application uses the following technical solutions.

According to a first aspect, interface address allocation is provided. The method includes: A service address allocation proxy function entity sends a first message to a network management function entity, where the first message is used to request to allocate an address to an interface of at least one interface type of a first network function; the service address allocation proxy function entity receives a second message from the network management function entity, where the second message indicates address information of the interface of the at least one interface type; and the service address allocation proxy function entity sends the address information to a service interface automation system.

Based on the method according to the first aspect, it may be learned that the service address allocation proxy function entity may request, by using the first message, the network management function entity to allocate an address to an interface, and the network management function entity may allocate an address to the interface based on the first message, and send address information to the service address allocation proxy function entity. After the service address allocation proxy function entity sends the address information to the service interface automation system, the service interface automation system may automatically generate an interface configuration of the first network function based on the received address information. In this way, an interface address can be automatically obtained and configured, and manual planning and configuration of an address for each interface can be avoided in an NF deployment phase, thereby improving efficiency of configuring an interface address, and implementing NF interface configuration in a distributed network.

In a possible design solution, the method according to the first aspect further includes: The service address allocation proxy function entity receives a third message from the service interface automation system, where the third message is used to request to allocate an address to the interface of the at least one interface type. That the service address allocation proxy function entity sends the first message to the network management function entity includes: The service address allocation proxy function entity sends the first message to the network management function entity based on the third message. It may be understood that the service interface automation system may trigger, by using the third message based on an actual situation, for example, after deployment of an NF, the service address allocation proxy function entity to send the first message to the network management function entity. In this way, the service address allocation proxy function entity can be automatically triggered to obtain an address of the interface of the at least one interface type of the first network function.

In a possible design solution, the first message is specifically used to request to allocate a preset quantity of addresses to the interface of the at least one interface type of the first network function, and the address information indicates the preset quantity of addresses. In this way, a quantity of addresses required for each interface in the interface of the at least one interface type can be flexibly set based on an actual situation, and the required quantity of addresses can be allocated to each interface in the interface of the at least one interface type, thereby implementing on-demand allocation.

Optionally, the first message includes at least one of the following: information indicating the first network function, information indicating the at least one interface type, or information indicating the preset quantity.

Optionally, the second message includes at least one of the following: information indicating the first network function, information indicating the at least one interface type, or the address information.

In a possible design solution, the second message further indicates validity duration, and the validity duration is duration for which the address indicated by the address information is allowed to be used. That the service address allocation proxy function entity sends the address information to the service interface automation system includes: The service address allocation proxy function entity sends the address information and the validity duration to the service interface automation system. In this way, a first function entity can determine, based on the validity duration, an expiration time of the address indicated by the address information, to facilitate processing before the address expires, for example, requesting to continue to use the address, thereby avoiding a case such as a service error after the address expires.

In a possible design solution, the address information includes at least one interface address and first network planning information, and the first network planning information indicates information about a network in which the at least one interface address is located. It may be understood that there is a correspondence between the at least one interface address and the first network planning information, that is, the at least one interface address is an address in the network indicated by the first network planning information. In this way, it can be ensured that when a plurality of networks include a same interface address, a unique interface address can be determined by using the first network planning information.

Optionally, the first network planning information is any one of the following: an internet protocol IP domain name or a virtual private network VPN. It may be understood that in other network planning, the first network planning information may be other information indicating the network, and may be specifically flexibly set based on an actual situation.

In a design solution, that the service address allocation proxy function entity sends the address information to the service interface automation system includes: The service address allocation proxy function entity sends the address information to the service interface automation system when determining that the address information is available for use. In this way, a case such as after an address is configured based on the address information, the address being unavailable can be avoided, thereby avoiding a service error and additional overheads generated when the service address allocation proxy function entity and the service interface automation system re-obtain the address information.

In a possible design solution, the method according to the first aspect further includes: When the address indicated by the address information expires, the service address allocation proxy function entity sends a fourth message to the network management function entity, where the fourth message is used to request to continue to allocate the address indicated by the address information to the interface of the at least one interface type of the first network function. It may be understood that "when the address expires" means "when the address is about to expire", for example, when use duration of the address indicated by the address information is about to reach validity duration of the address. In this way, it can be ensured that the interface of the at least one interface type of the first network function has an address available for use, thereby avoiding a case such as a service error caused by the address configured for the interface.

Optionally, the fourth message includes at least one of the following: information indicating the first network function, information indicating the interface of the at least one interface type, or the address information.

According to a second aspect, an interface address allocation method is provided. The method includes: A network management function entity receives a first message from a service address allocation proxy function entity, where the first message is used to request to allocate an address to an interface of at least one interface type of a first network function; and the network management function entity sends a second message to the service address allocation proxy function entity based on the first message, where the second message indicates address information of the interface of the at least one interface type.

In a possible design solution, the first message is specifically used to request to allocate a preset quantity of addresses to the interface of the at least one interface type of the first network function, and the address information indicates the preset quantity of addresses.

Optionally, the first message includes at least one of the following: information indicating the first network function, information indicating the at least one interface type, or information indicating the preset quantity.

Optionally, the second message includes at least one of the following: information indicating the first network function, information indicating the at least one interface type, or the address information.

In a possible design solution, before the network management function entity receives the first message from the service address allocation proxy function entity, the method according to the second aspect further includes: The network management function entity sends a fifth message to a service network management center, where the fifth message is used to obtain an address network segment corresponding to an interface of a first interface type, the first interface type includes an interface type of an interface determined for deployment, and the at least one interface type of the first network function belongs to the first interface type; and the network management function entity receives a sixth message from the service network management center, where the sixth message indicates address network segment information corresponding to the interface of the first interface type. That the network management function entity sends the second message to the service address allocation proxy function entity based on the first message includes: The network management function entity sends the second message to the service address allocation proxy function entity based on the first message and the sixth message. That is, the network management function entity may pre-obtain the address network segment corresponding to the interface of the first interface type, to ensure that there are sufficient addresses to allocate an address to each interface.

In a possible design solution, before the network management function entity receives the first message from the service address allocation proxy function entity, the method according to the second aspect further includes: The network management function entity receives a seventh message from a topology orchestrator, where the seventh message indicates address network segment information corresponding to an interface of a second interface type, the second interface type includes all interface types corresponding to a planned network, and the at least one interface type of the first network function belongs to the second interface type. That the network management function entity sends the second message to the service address allocation proxy function entity based on the first message includes: The network management function entity sends the second message to the service address allocation proxy function entity based on the first message and the seventh message. It may be understood that when an address scale required for deployment to an edge network or a distributed network is determined, the topology orchestrator may send planned related information of each interface (for example, an interface type and an address network segment corresponding to an interface of each interface type) to the network management function entity, so that the network management function entity can directly use the related information when subsequently allocating an address to the interface, and the network management function entity does not need to request the address network segment corresponding to the interface of each interface type from the service network management center, thereby reducing communication overheads of the network management function entity.

Optionally, the method according to the second aspect further includes: The network management function entity sends an eighth message to an edge gateway based on the sixth message or the seventh message, where the eighth message is used to request to configure a network segment route corresponding to the address network segment information. That is, after receiving the address network segment corresponding to the interface of each interface type, the network management function entity may configure a corresponding network segment route based on the address network segment. In this way, a network route can be automatically configured, and manual configuration of a network segment route can be avoided, thereby improving efficiency of configuring a network segment route.

Optionally, the address network segment information includes at least one interface address network segment and second network planning information, and the second network planning information indicates information about a network in which the at least one interface address network segment is located. It may be understood that there is a correspondence between the at least one interface address network segment and the second network planning information, that is, the interface address network segment is an address network segment in the second network planning information. In this way, the network can be determined by using the second network planning information, and each address in the network can be determined by using the address network segment.

In a possible design solution, the address information includes at least one interface address and first network planning information, and the first network planning information indicates information about a network in which the interface address is located.

Optionally, the first network planning information is any one of the following: an internet protocol IP domain name or a virtual private network VPN.

In addition, for technical effects of the method according to the second aspect, refer to the technical effects of the method according to the first aspect. Details are not described herein.

According to a third aspect, an interface address allocation method is provided. The method includes: A service interface automation system receives address information from a service address allocation proxy function entity, where the address information indicates an address allocated to an interface of at least one interface type of a first network function; and the service interface automation system generates an interface configuration of the first network function based on the address information.

In a possible design solution, before the service interface automation system receives the address information from the service address allocation proxy function entity, the method according to the third aspect further includes: The service interface automation system sends a third message to the service address allocation proxy function entity, where the third message is used to request to allocate an address to the interface of the at least one interface type of the first network function.

Optionally, the third message is specifically used to request to allocate a preset quantity of addresses to the interface of the at least one interface type, and the address information indicates the preset quantity of addresses. In this way, a quantity of addresses required for each interface in the interface of the at least one interface type can be flexibly set based on an actual situation, and the required quantity of addresses can be allocated to each interface in the interface of the at least one interface type, thereby implementing on-demand allocation.

In a possible design solution, the address information includes at least one interface address and first network planning information, and the first network planning information indicates information about a network in which the interface address is located.

Optionally, the first network planning information is any one of the following: an internet protocol IP domain name or a virtual private network VPN.

In addition, for technical effects of the method according to the third aspect, refer to the technical effects of the method according to the first aspect. Details are not described herein.

According to a fourth aspect, an interface address allocation method is provided. The method includes: A service address allocation proxy function entity sends a first message to a network management function entity, where the first message is used to request to continue to use a first address allocated to an interface of a first interface type of a first network function; and the service address allocation proxy function entity receives a second message from the network management function entity, where the second message is used to allocate a second address to the interface of the first interface type.

Based on the method according to the fourth aspect, it may be learned that when the first address is about to expire, the service address allocation proxy function entity may request the network management function entity to allocate the first address. After receiving the request, the network management function entity may allocate the second address to the service address allocation proxy function entity. In this way, a case in which after the first address expires, the interface of the first interface type of the first network function cannot use the first address and has no available address can be avoided, thereby avoiding a case such as a service error caused because the interface has no available address.

In a possible design solution, the first message includes at least one of the following: information indicating the first network function, information indicating the first interface type, or information indicating the first address.

In a possible design solution, the second message includes at least one of the following: information indicating the first network function, information indicating the first interface type, or information indicating the second address.

In a possible design solution, the second message further indicates validity duration, and the validity duration is duration for which the second address is allowed to be used. In this way, a first function entity can determine, based on the validity duration, an expiration time of an address indicated by address information, to facilitate processing before the address expires, for example, continuing to request to use the address, thereby avoiding a case such as a service error after the address expires.

In a possible design solution, the method according to the fourth aspect further includes: The service address allocation proxy function entity sends a third message to a service interface automation system, where the third message is used to request to update the first address to the second address. That is, when the second address is different from the first address, the service address allocation proxy function may request the service interface automation system to perform address updating, that is, reconfigure an address for the interface of the first interface type of the first network function. In this way, normal service running can be ensured.

Optionally, the third message includes at least one of the following: information indicating the first interface type, information indicating the first address, or information indicating the second address.

In a possible design solution, before the service address allocation proxy function entity sends the first message to the network management function entity, the method according to the fourth aspect further includes: The service address allocation proxy function entity receives a fourth message from the service interface automation system, where the fourth message is used to request to allocate the first address. That the service address allocation proxy function entity sends the first message to the network management function entity includes: The service address allocation proxy function entity sends the first message to the network management function entity based on the fourth message. It may be understood that after the first network function is re-enabled, the interface address needs to remain unchanged. In this case, after reading configuration data, the service interface automation system may trigger, by using the fourth message, the service address allocation proxy function entity to request allocation of the first address, to ensure that the first address is available.

Optionally, the fourth message includes at least one of the following: information indicating the first interface type or information indicating the first address.

According to a fifth aspect, an interface address allocation method is provided. The method includes: A network management function entity receives a first message from a service address allocation proxy function entity, where the first message is used to request to continue to use a first address allocated to an interface of a first interface type of a first network function; and the network management function entity sends a second message to the service address allocation proxy function entity based on the first message, where the second message is used to allocate a second address to the interface of the first interface type.

In a possible design solution, the first message includes at least one of the following: information indicating the first network function, information indicating the first interface type, or information indicating the first address.

In a possible design solution, the second message includes at least one of the following: information indicating the first network function, information indicating the first interface type, or information indicating the second address.

In a possible design solution, the second message further indicates validity duration, and the validity duration is duration for which the second address is allowed to be used. In this way, a first function entity can determine, based on the validity duration, an expiration time of an address indicated by address information, to facilitate processing before the address expires, for example, continuing to request to use the address, thereby avoiding a case such as a service error after the address expires.

In addition, for technical effects of the method according to the fifth aspect, refer to the technical effects of the method according to the fourth aspect. Details are not described herein.

According to a sixth aspect, an interface address allocation method is provided. The method includes: A service interface automation system receives a third message from a service address allocation proxy function entity, where the third message is used to request to update a first address corresponding to an interface of a first interface type of a first network function to a second address; and the service interface automation system updates the first address to the second address based on the third message.

In a possible design solution, the third message includes at least one of the following: information indicating the first interface type, information indicating the first address, or information indicating the second address.

In a possible design solution, before the service interface automation system receives the third message from the service address allocation proxy function entity, the method according to the sixth aspect further includes: The service interface automation system sends a fourth message to the service address allocation proxy function entity, where the fourth message is used to request to allocate the first address.

Optionally, the fourth message includes at least one of the following: information indicating the first interface type or information indicating the first address.

In addition, for technical effects of the method according to the sixth aspect, refer to the technical effects of the method according to the fourth aspect. Details are not described herein.

According to a seventh aspect, an interface address allocation method is provided. The method includes: A service address allocation proxy function entity performs the method according to the first aspect, and a network management function entity performs the method according to the second aspect; or a service address allocation proxy function entity performs the method according to the first aspect, a network management function entity performs the method according to the second aspect, and a service interface automation system performs the method according to the third aspect.

In addition, for technical effects of the method according to the seventh aspect, refer to the technical effects of the methods according to the first aspect to the third aspect. Details are not described herein.

According to an eighth aspect, an interface address allocation method is provided. The method includes: A service address allocation proxy function entity performs the method according to the fourth aspect, and a network management function entity performs the method according to the fifth aspect; or a service address allocation proxy function entity performs the method according to the fourth aspect, a network management function entity performs the method according to the fifth aspect, and a service interface automation system performs the method according to the sixth aspect.

In addition, for technical effects of the method according to the eighth aspect, refer to the technical effects of the methods according to the fourth aspect to the sixth aspect. Details are not described herein.

According to a ninth aspect, a communication apparatus is provided. The communication apparatus includes a module configured to perform the method according to any one of the first aspect to the sixth aspect, for example, a transceiver module and a processing module. For example, the transceiver module is configured to indicate receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module. The storage module stores a program or instructions. When the processing module executes the program or the instructions, the communication apparatus is caused to perform the method according to any one of the first aspect to the sixth aspect.

It may be understood that the communication apparatus according to the ninth aspect may be a network device, may be a chip (system) or another part or component that may be disposed in the network device, or may be an apparatus including the network device. This is not limited in this application.

In addition, for technical effects of the communication apparatus according to the ninth aspect, refer to the technical effects of the method according to any one of the implementations of the first aspect to the sixth aspect. Details are not described herein.

According to a tenth aspect, a communication apparatus is provided. The communication apparatus includes a processor. When the processor executes computer instructions, the communication apparatus is caused to perform the method according to any one of the possible implementations of the first aspect to the sixth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design solution, the communication apparatus according to the tenth aspect may further include a memory. The memory may be integrated with the processor, or may be disposed separately. The memory may be configured to store a computer program and/or data in the method according to any one of the first aspect to the sixth aspect.

In this embodiment of this application, the communication apparatus according to the tenth aspect may be the network device according to any one of the first aspect to the sixth aspect, a chip (system) or another part or component that may be disposed in the network device, or an apparatus including the network device.

In addition, for technical effects of the communication apparatus according to the tenth aspect, refer to the technical effects of the method according to any one of the implementations of the first aspect to the sixth aspect. Details are not described herein.

According to an eleventh aspect, a communication apparatus is provided. The communication apparatus includes a processor. The processor is coupled to a memory, and the processor is configured to execute a computer program stored in the memory, to enable the communication apparatus to perform the method according to any one of the possible implementations of the first aspect to the sixth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this embodiment of this application, the communication apparatus according to the eleventh aspect may be the network device according to any one of the first aspect to the sixth aspect, a chip (system) or another part or component that may be disposed in the network device, or an apparatus including the network device.

In addition, for technical effects of the communication apparatus according to the eleventh aspect, refer to the technical effects of the method according to any one of the implementations of the first aspect to the sixth aspect. Details are not described herein.

According to a twelfth aspect, a communication apparatus is provided, and includes a processor and a memory. The memory is configured to store a computer program. When the processor executes the computer program, the communication apparatus is caused to perform the method according to any one of the implementations of the first aspect to the sixth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this embodiment of this application, the communication apparatus according to the twelfth aspect may be the network device according to any one of the first aspect to the sixth aspect, a chip (system) or another part or component that may be disposed in the network device, or an apparatus including the network device.

In addition, for technical effects of the communication apparatus according to the twelfth aspect, refer to the technical effects of the method according to any one of the implementations of the first aspect to the sixth aspect. Details are not described herein.

According to a thirteenth aspect, a communication chip is provided. The communication chip stores instructions. When the chip runs on a communication device, the method according to any one of the implementations of the first aspect to the sixth aspect is implemented.

According to a fourteenth aspect, a communication chip is provided, and includes a logic circuit and a communication interface. The logic circuit is configured to execute computer instructions, and the communication interface is used by the communication chip to communicate with another apparatus or chip. When the logic circuit executes the computer instructions, the method according to any one of the implementations of the first aspect to the sixth aspect is implemented.

According to a fifteenth aspect, a communication system is provided. The communication system includes at least one of the following: a service address allocation proxy function entity configured to perform the method according to the first aspect, a network management function entity configured to perform the method according to the second aspect, or a service interface automation system configured to perform the method according to the third aspect.

According to a sixteenth aspect, a communication system is provided. The communication system includes at least one of the following: a service address allocation proxy function entity configured to perform the method according to the fourth aspect, a network management function entity configured to perform the method according to the fifth aspect, or a service interface automation system configured to perform the method according to the sixth aspect.

According to a seventeenth aspect, a computer-readable storage medium is provided, and includes a computer program or instructions. When the computer program or the instructions are executed by a computer, the computer is caused to perform the method according to any one of the possible implementations of the first aspect to the sixth aspect.

According to an eighteenth aspect, a computer program product is provided, and includes a computer program or instructions. When the computer program or the instructions are executed by a computer, the computer is caused to perform the method according to any one of the possible implementations of the first aspect to the sixth aspect.

### BRIEF DESCRIPTION OF DRAWINGS

FIG. 1 is a diagram of a network function NF deployment process according to an embodiment of this application;
FIG. 2 is a diagram of interface interconnection according to an embodiment of this application;
FIG. 3 is a diagram 1 of an architecture of a communication system according to an embodiment of this application;
FIG. 4 is a diagram 2 of an architecture of a communication system according to an embodiment of this application;
FIG. 5 is a diagram 3 of an architecture of a communication system according to an embodiment of this application;
FIG. 6 is a schematic flowchart 1 of an interface address allocation method according to an embodiment of this application;
FIG. 7A and FIG. 7B are a schematic flowchart 2 of an interface address allocation method according to an embodiment of this application;
FIG. 8 is a schematic flowchart 3 of an interface address allocation method according to an embodiment of this application;
FIG. 9 is a schematic flowchart 4 of an interface address allocation method according to an embodiment of this application;
FIG. 10 is a schematic flowchart 5 of an interface address allocation method according to an embodiment of this application;
FIG. 11 is a schematic flowchart 6 of an interface address allocation method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

For ease of understanding, the following first describes technical terms in embodiments of this application.

### 1. NF deployment process

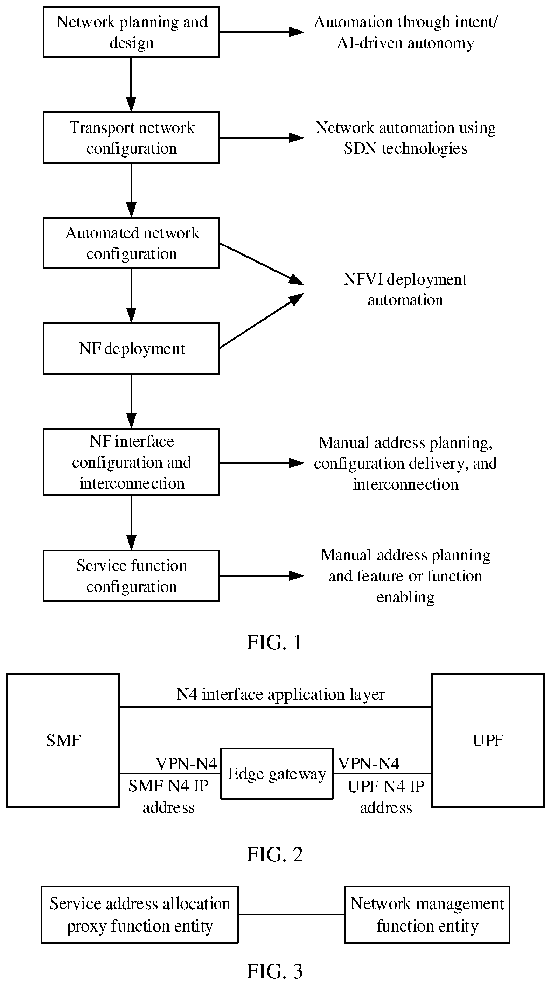

As shown in FIG. 1, the NF deployment process mainly includes network planning and design, transport network configuration, automated network configuration, NF deployment, NF interface configuration and interconnection, and service function configuration. Network planning and design is overall planning and design of a network, for example, planning and design of an interface type included in the network and interface address network segments corresponding to different interface types. In the future, automation of network planning and design may be implemented through intent or artificial intelligence (artificial intelligence, AI)-driven autonomy. Automation of transport network configuration may be implemented by using software-defined networking (software-defined networking, SDN) technologies. That is, a network configuration command is delivered to an SDN controller (controller) to implement transport network automation. Automated network configuration and NF deployment may be implemented by using technologies such as management and orchestration (management and orchestration, MANO) and network functions virtualization infrastructure (network functions virtualization infrastructure, NFVI). NF interface configuration and interconnection may also be referred to as service interface configuration and interconnection, and involves address planning and address configuration for an NF interface (for example, an N2 interface (interface) and an N4 interface), completion of peer NF interconnection, and the like. Service function configuration involves enabling different NF functions based on different scenarios. The service function configuration needs to be manually planned.

### 2. NF interface configuration and interconnection

In a process of NF interface configuration and interconnection, a service interface internet protocol (internet protocol, IP) address (address) needs to be manually planned. In addition, the interface IP address and a corresponding VPN configuration are manually delivered on an NF based on planning of a network-wide virtual private network (virtual private network, VPN). Then, based on an interface interconnection manner, a peer IP address is locally configured for interconnection, or a service-based architecture (service-based architecture, SBA) is used for automatic service discovery of a peer interface IP to complete interconnection, or a manner of serving as a server and waiting for a peer device to initiate a link establishment procedure to complete interconnection is used.

As shown in FIG. 2, the following uses completion of N4 interface interconnection between a session management function (session management function, SMF) and a user plane function (user plane function, UPF) an example for description. An entire configuration process that needs to be completed on the SMF is as follows:

S201: Obtain a VPN plan for an N4 interface, namely, VPN-N4 (denoted as a VPN #1), from an overall network plan of an operator.

S202: Allocate an IP address (denoted as an IP address #1) to the SMF from an IP address network segment reserved by the operator for the N4 interface. That is, the IP address #1 serves as a local address of the N4 interface of the SMF.

The SMF is usually deployed in a data center or a provincial network center. After the IP address is allocated, a network segment route on which the IP address is located needs to be configured on an edge gateway of the data center or the provincial network center.

S203: Configure the IP address #1 and the VPN #1 for the N4 interface on the SMF.

After the IP address #1 and the VPN #1 are configured for the N4 interface, information about an N4 interface application layer may be further configured.

S204: The SMF actively advertises an N4 interface address route.

After receiving an IP packet sent to the IP address #1, the edge gateway may directly forward the packet to the SMF for processing.

S205: The SMF receives an N4 interface link establishment request message initiated by the UPF, and completes establishment of an N4 interface link.

A current NF interface configuration process is described above. It may be understood that a 6G network evolves from a centralized network to a distributed network, so that the entire network includes massive distributed networks. Application scenarios of these distributed networks gradually expand from industrial application scenarios to life, sports, and entertainment scenarios. In new scenarios, the distributed network needs to be quickly deployed, that is, a deployment time of the distributed network needs to be shortened from a previous month level to a day level, an hour level, or a minute level.

Deployment of the distributed network involves NF interface configuration. Currently, NF interface configuration needs to be planned by an operator or a third party, that is, needs to be manually configured. Consequently, efficiency of NF interface configuration is low, making it inapplicable to the distributed network. Therefore, how to configure each NF interface in the distributed network is currently a hot topic of discussion.

To resolve the foregoing technical problem, embodiments of this application provide the following technical solutions, to configure an NF interface in a distributed network.

The following describes technical solutions in this application with reference to accompanying drawings.

The technical solutions in embodiments of this application may be applied to various communication systems, for example, a 4th generation (4th generation, 4G) mobile communication system, such as a long term evolution (long term evolution, LTE) system, a 5th generation (5th generation, 5G) mobile communication system, such as a new radio (new radio, NR) system, and a communication system evolved after 5G, such as a 6th generation (6th generation, 6G) mobile communication system, and may be further applied to a wireless fidelity (wireless fidelity, Wi-Fi) system, a vehicle-to-everything (vehicle-to-everything, V2X) communication system, a device-to-device (device-to-device, D2D) communication system, an internet of vehicles communication system, and the like.

Various aspects, embodiments, or features are presented in this application by using a system that may include a plurality of devices, components, modules, and the like. It should be understood and appreciated that each system may include another device, component, module, and the like, and/or may not include all devices, components, modules, and the like described with reference to the accompanying drawings. In addition, a combination of these solutions may be used.

In addition, in embodiments of this application, words such as "example" and "for example" represent giving an example, an illustration, or a description. Any embodiment or design solution described as an "example" in this application should not be explained as being more preferred or having more advantages than another embodiment or design solution. Exactly, use of the word "example" is intended to present a concept in a specific manner.

In embodiments of this application, "information (information)", "signal (signal)", "message (message)", "channel (channel)", and "signaling (signaling)" sometimes may be interchangeably used. It should be noted that when a difference between "information", "signal", "message", "channel", and "signaling" is not emphasized, meanings expressed by "information", "signal", "message", "channel", and "signaling" match. "Of (of)", "corresponding or relevant (corresponding or relevant)", and "corresponding (corresponding)" sometimes may be interchangeably used. It should be noted that when a difference between "of", "corresponding or relevant", and "corresponding" is not emphasized, meanings expressed by "of", "corresponding or relevant", and "corresponding" match. In addition, "/" in this application may represent an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

To facilitate understanding of embodiments of this application, a communication system shown in FIG. 3 is first used as an example to describe in detail a communication system applicable to embodiments of this application. For example, FIG. 3 is a diagram of an architecture of a communication system to which an interface address allocation method is applicable according to an embodiment of this application.

As shown in FIG. 3, the communication system includes a service address allocation proxy function entity and a network management function entity.

Optionally, the communication system may further include a service interface automation system.

The communication system may be used in architectures of different communication systems. In different architectures, the network management function entity may be different function entities. The following separately provides descriptions.

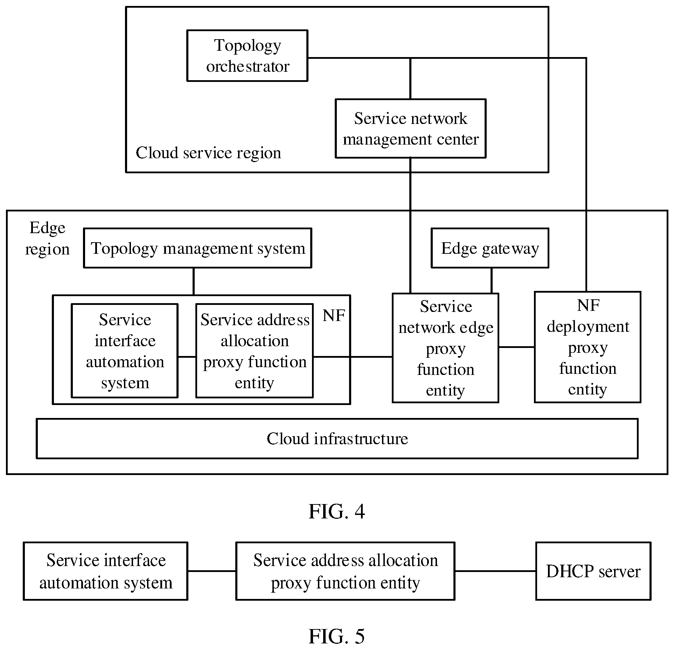

As shown in FIG. 4, a system architecture shown in FIG. 4 includes a topology orchestrator, a service network management center, a service network edge proxy function entity, a service address allocation proxy function entity, a service interface automation system, an NF deployment proxy function entity, an edge gateway, a topology management system, and cloud infrastructure.

The topology orchestrator may be configured to: manage network topology planning information (for example, interface subnet planning and service interface IP network segment planning) and trigger automatic NF deployment in an edge network.

The service network management center may be configured to: provide a network-wide interface address management function, maintain network-wide service IP subnet division and IP network segment division, and maintain interface address information allocated to each edge network.

The service network edge proxy function entity may be configured to: provide an NF with a function of allocating an address based on an interface type and obtaining a VPN, and provide an NF identifier (identifier, ID)-based address lease function. In a scenario of a network slice or a subnet (core network) of a distributed network, the service network edge proxy function entity has two deployment manners: Manner 1 is shared deployment, that is, all slices or subnets share one service network edge proxy function entity. In this case, a message interface provided by the service network edge proxy function entity to the outside needs to carry a network slice ID or a subnet ID. Manner 2 is independent deployment, that is, each network slice or subnet has an independent service network edge proxy. In this case, a message interface provided by the service network edge proxy function entity to the outside does not need to carry a network slice ID or a subnet ID.

The service address allocation proxy may be configured to: when an NF is completely deployed and initially configured, act as a proxy for the NF to apply to the service network edge proxy function entity for an interface address, periodically renew the address with the service network edge proxy function entity, and release the interface address to the service network edge proxy function entity when the NF is offline.

The service interface automation system may be configured to: generate an NF interface configuration based on an obtained interface address, store the configuration in a persistent medium such as a file/data, and advertise a service interface IP route. It may be understood that an IP route advertisement manner may be a dynamic route advertisement manner. For example, a host route is advertised by using a border gateway protocol (border gateway protocol, BGP).

The NF deployment proxy function entity may be configured to: receive NF deployment information, for example, an NF function pre-configuration and NF supported interface information, and notify the service network edge proxy function entity to apply to the service network management center for an interface address segment required by an NF.

The edge gateway may be configured to provide an interface address routing function.

The topology management system may be configured to provide an NF topology information management function in a network. The NF may automatically discover an interface address of a target NF through the topology management system, to implement link-level interconnection between NFs. It may be understood that in a 5th generation mobile communication technology (5th generation mobile communication technology, 5G) network, the topology management system may be equivalent to a network repository function (network repository function, NRF).

The cloud infrastructure may be configured to provide basic computing, storage, network resources, and the like.

It may be understood that the topology orchestrator and the service network management center may be deployed in a cloud service region (region). The cloud service region may be an operator data center, and may be used for end-to-end service network orchestration and management. The service network edge proxy function entity, the service address allocation proxy function entity, the service interface automation system, the NF deployment proxy function entity, the edge gateway, the topology management system, and the cloud infrastructure may be deployed in an edge (edge) region. The edge region is usually an edge network. The service address allocation proxy function entity and the service address allocation proxy function entity may be disposed in the NF, that is, different NFs may each include the service address allocation proxy function entity and the service address allocation proxy function entity. In addition, in the system architecture shown in FIG. 4, the network management function entity in this embodiment of this application may be the foregoing service network edge proxy function entity.

As shown in FIG. 5, a system architecture shown in FIG. 5 includes a service interface automation system, a service address allocation proxy function entity, and a DHCP server. For the service interface automation system and the service address allocation proxy function entity, refer to the foregoing related descriptions. Details are not described herein. The DHCP server may be a DHCPv4 server or a DHCPv6 server. For details, refer to the conventional technology. Details are not described herein. In the system architecture shown in FIG. 5, the network management function entity in this embodiment of this application may be the foregoing DHCP server.

It may be understood that the "function entity" in this embodiment of this application is merely an example expression form, and the "function entity" may be replaced with any possible expression form, for example, a "module" or a "logical functional module". This is not limited. In addition, the "NF" in this embodiment of this application may be replaced with a "network element".

In the communication system, the service address allocation proxy function entity may request the network management function entity to allocate an address to an interface, and after receiving address information allocated by the network management function entity to the interface, the service address allocation proxy function entity may send the address information to the service interface automation system, so that the service interface automation system generates a corresponding configuration based on the address information. In this way, the address information can be automatically obtained and configured, and manual obtaining of the address information is avoided, thereby improving efficiency of obtaining the address information, and implementing NF interface configuration in a distributed network.

It may be understood that FIG. 3 is a simplified diagram used as an example for ease of understanding. The communication system may further include other network devices and/or other terminal devices not shown in FIG. 3.

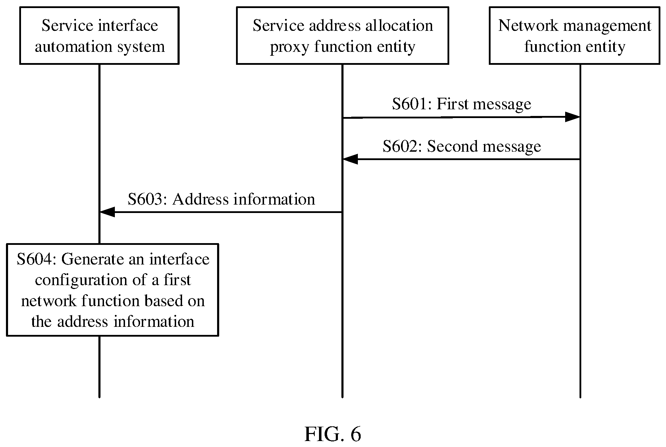

For ease of understanding, the following describes, with reference to FIG. 6 to FIG. 11, in detail the interface address allocation method provided in embodiments of this application.

FIG. 6 is a schematic flowchart of an interface address allocation method according to an embodiment of this application. The method is applicable to interaction between the service address allocation proxy function entity and the network management function entity in the foregoing communication system.

As shown in FIG. 6, a procedure of the interface address allocation method is as follows:
S601: The service address allocation proxy function entity sends a first message to the network management function entity. Correspondingly, the network management function entity receives the first message from the service address allocation proxy function entity.

The first message may be used to request to allocate an address to an interface of at least one interface type of a first network function.

The first network function may be a function entity in which the service address allocation proxy function entity is located, that is, the service address allocation proxy function entity may be deployed in the first network function.

The interface type may include an interface type in the 3rd generation partnership project (3rd generation partnership project, 3GPP), for example, an N2 interface, an N4 interface, a service-based interface (service-based interface, SBI), an N3 interface, an N9 interface, an S11 interface, an S5 interface, or an S8 interface. For each interface, refer to the conventional technology. Details are not described herein. It may be understood that the interface type may further include various interface types in a future communication system. The interface of the at least one interface type may be an interface for which an address needs to be configured in the first network function.

The address may indicate each interface in the interface of the at least one interface type, that is, each interface in the interface of the at least one interface type may be determined by using the address. The address may be an interface address, for example, an IP address, or may be an interface address and network planning information (denoted as network planning information #1) indicating a network in which the interface address is located. The network planning information #1 may be an IP domain name, a VPN, or other information indicating a network in network planning. For example, the address may be an IP address, or an IP address and an IP domain name, or an IP address and a VPN, and may be specifically determined based on an actual situation. For example, when networks include different IP addresses, the address may be an IP address, that is, a unique interface may be determined by using the IP address. Alternatively, when different networks include a same IP address, the address may be an IP address and an IP domain name, that is, a network may be indicated by using the IP domain name, and the IP address is located in the network. Alternatively, the address may be an IP address and a VPN, that is, a network may be indicated by using the VPN, and the IP address is located in the network.

The first message may include at least one of the following: information indicating the first network function or information indicating the at least one interface type. The information indicating the first network function may be an ID of the first network function, for example, a universally unique identifier (universally unique identifier, UUID) or a fully qualified domain name (fully qualified domain name, FQDN) corresponding to the first network function, or may be information that is preset or predefined in a protocol and that indicates the first network function. The information indicating the at least one interface type may be the at least one interface type, for example, an N2 interface or an N4 interface. The interface type may be in a form of an integer or a string, and requires global addressing. The information indicating the at least one interface type may alternatively be information that is preset or predefined in a protocol and that indicates each interface type in the at least one interface type. The first message carries the information indicating the first network function and the information indicating the at least one interface type, so that a request for allocating an address to the interface of the at least one interface type of the first network function can be made.

It may be understood that when there are a plurality of interfaces for which addresses need to be configured in the first network function, the service address allocation proxy function entity may send the first message once or send the first message a plurality of times. That is, the service address allocation proxy function entity may send the first message once, where the first message requests to allocate an address to the plurality of interfaces. Alternatively, the service address allocation proxy function entity may send the first message a plurality of times, where each first message in the plurality of first messages requests to allocate an address to at least a part of the plurality of interfaces.

In addition, each interface in the interface of the at least one interface type may request allocation of at least one address. There are a plurality of manners of requesting allocation of at least one address. For example, a quantity of addresses allocated to each interface is preset or predefined in a protocol, or a quantity of addresses allocated to each interface is indicated in the first message. The following separately provides descriptions.

Case 1.1: The quantity of addresses allocated to each interface is preset or predefined in a protocol.

The quantity of addresses requested by each interface may be predefined in a protocol or preset in the network management function entity. That is, the quantity of addresses corresponding to each interface may be preset or predefined in a protocol, so that after receiving the first message, the network management function entity may allocate an address corresponding to the quantity of addresses to each interface in the interface of the at least one interface type. It may be understood that the quantity of addresses corresponding to each interface may be determined based on an actual situation, that is, a same quantity or a different quantity of addresses may be set for each interface based on an actual situation.

For example, it is preset, in the network management function entity, to allocate one address to each interface that requests address allocation. In this case, after receiving the first message, the network management function entity may allocate one address to each interface indicated by the first message.

For another example, it is preset, in the network management function entity, to allocate n addresses to first N interfaces in all interfaces that request address allocation and allocate s addresses to an interface other than the first N interfaces in all the interfaces. In this case, after receiving the first message, the network management function entity may allocate n addresses to first N interfaces in all interfaces indicated by the first message, and allocate s addresses to an interface other than the first N interfaces in all the interfaces indicated by the first message. Herein, N is an integer greater than or equal to 1, both n and s are positive integers, and n and s are different.

Case 1.2: The quantity of addresses allocated to each interface is indicated in the first message.

The first message may be specifically used to request to allocate a preset quantity of addresses to the interface of the at least one interface type of the first network function. That is, the first message may indicate a quantity of addresses that need to be allocated to each interface in the interface of the at least one interface type. It may be understood that quantities of addresses that need to be allocated to all the interfaces may be the same or different. This may be specifically flexibly set based on an actual situation.

For example, the first message requests to allocate two addresses to each of the N4 interface and the N2 interface. In this case, after receiving the first message, the network management function entity may allocate two addresses to each interface indicated by the first message. Alternatively, the first message requests to allocate two addresses to the N4 interface and allocate four addresses to the N2 interface. In this case, after receiving the first message, the network management function entity may allocate two addresses to the N4 interface indicated by the first message and allocate four addresses to the N2 interface.

In this case, the first message may include at least one of the following: information indicating the first network function, information indicating the at least one interface type, or information indicating the preset quantity. For details of the information indicating the first network function and the information indicating the at least one interface type, refer to the foregoing related descriptions. Details are not described herein. The information indicating the preset quantity may be the quantity of addresses corresponding to each interface in the interface of the at least one interface type, or may be information that is preset or predefined in a protocol and that indicates the quantity of addresses corresponding to each interface. This may be specifically set based on an actual situation.

The first message is described above. It may be understood that when the network management function entity is a dynamic host configuration protocol (dynamic host configuration protocol, DHCP) v4 server, a DHCP discover (DISCOVER) message may be reused for the first message. Alternatively, when the network management function entity is a DHCPv6 server, a DHCP solicit (SOLICIT) message may be reused for the first message. In this case, a DHCP option (option) definition may be newly added, for example, an interface type address allocation option and an NF ID option. The interface type address allocation option may indicate each interface type, and may include information elements such as an option code (option-code), an option length (option-len), and an interface type (interface type). For specific information of the information elements, refer to Table 1. The NF ID option may indicate an NF, and may include information elements such as an option code (option-code), an option length (option-len), and an ID. For specific information of the information elements, refer to Table 2.

**Table 1**

| Key information element | Type | Description |
|---|---|---|
| Option code | Integer, 2 bytes | Defined based on a current DHCP standard format, with a value allocated and managed by the Internet Assigned Numbers Authority (Internet Assigned Numbers Authority, IANA) |
| Option length | 2 bytes | Indicates a field length of the interface type address allocation option, and follows the DHCP standard format |
| Interface type | Integer, 2 bytes | Indicates an interface type |

**Table 2**

| Key information element | Type | Description |
|---|---|---|
| Option code | Integer, 2 bytes | Defined based on the current |
| | | DHCP standard format, with a value allocated and managed by the IANA |
| Option length | 2 bytes | Indicates a field length of the NF ID option, and follows the DHCP standard format |
| NF ID | String/Integer/UUID, variable length | NF entity identifier, which may use a common network entity expression form such as a hostname or a UUID |

It may be understood that after the interface type address allocation option and the NF ID option are newly added, the newly added interface type address allocation option may indicate the at least one interface type, and the NF ID option may indicate the first network function. That is, the DHCP discover message may include the interface type address allocation option and/or the NF ID option. The DHCP solicit message may include the interface type address allocation option and/or the NF ID option. In addition, if a plurality of addresses need to be configured for one interface, the DHCP discover message or the DHCP solicit message may be sent a plurality of times, that is, each time the DHCP discover message or the DHCP solicit message is sent, a request is made to allocate one address to the interface.

S602: The network management function entity sends a second message to the service address allocation proxy function entity. Correspondingly, the service address allocation proxy function entity receives the second message from the network management function entity.

The second message may indicate address information of the interface of the at least one interface type.

The address information may indicate an address allocated to the interface of the at least one interface type. The address information may include at least one interface address, for example, at least one IP address, or may include at least one interface address and first network planning information. The first network planning information may indicate information about a network in which the at least one interface address is located. It may be understood that the first network planning information may include network planning information corresponding to all interface addresses in the at least one interface address. The network planning information corresponding to all the interface addresses in the at least one interface address may be the same or different. This may be specifically set based on an actual situation. For example, the at least one interface address includes an interface address #a1, an interface address #a2, and an interface address #a3, and the first network planning information may include network planning information #a1 corresponding to the interface address #a1, network planning information #a2 corresponding to the interface address #a2, and network planning information #a3 corresponding to the interface address #a3. The first network planning information may be an IP domain name or a VPN, and in other different network planning, for example, in a network in which an IP domain name or VPN planning is not used, the IP domain name and the VPN may be replaced with information indicating the network in the network planning. In addition, information included in the address information is related to network planning. For example, when interface addresses in networks are not duplicated, the address information may be at least one interface address, that is, a unique interface may be determined based on the interface address. For another example, when interface addresses in networks are duplicated, the address information may include at least one interface address and the first network planning information, that is, a unique interface may be determined based on the interface address and the first network planning information. It may be understood that the IP domain name or the VPN may be represented by using strings.

The second message may include at least one of the following: information indicating the first network function, information indicating the at least one interface type, or the address information. For the information indicating the first network function and the information indicating the at least one interface type, refer to the related descriptions of "S601". Details are not described herein. The address information may include an interface address corresponding to each interface in the interface of the at least one interface type. There may be one or more interface addresses. When there are a plurality of interface addresses, the addresses may be sent in a form of a list.

For example, as shown in Table 3, the at least one interface type includes the N2 interface, the N3 interface, and the N4 interface. An address allocated to the N2 interface is an interface address #1 in a VPN #1, addresses allocated to the N3 interface are an interface address #2 in a VPN #2 and an interface address #3 in a VPN #3, and addresses allocated to the N4 interface are an interface address #4 in a VPN #4 and an interface address #5 in the VPN #2.

**Table 3**

| Interface type | VPN | Interface address |
|---|---|---|
| N2 interface | VPN #1 | Interface address #1 |
| N3 interface | VPN #2 | Interface address #2 |
| | VPN #3 | Interface address #3 |
| N4 interface | VPN #4 | Interface address #4 |
| | VPN #4 | Interface address #5 |

After receiving the first message, the network management function entity may allocate an address to each interface in the interface of the at least one interface type, and after allocating the address, may indicate, to the network management function entity by using the second message, the address allocated to each interface in the interface of the at least one interface type, namely, the address information.

It may be understood that the network management function entity may allocate a preset quantity of addresses to each interface in the interface of the at least one interface type. A quantity of addresses allocated to each interface in the interface of the at least one interface type is related to the preset quantity of addresses, the quantity of addresses predefined in a protocol, or the quantity of addresses indicated in the first message. The following separately provides descriptions.

For the case 1.1, if the quantity of addresses allocated to each interface is preset or predefined in a protocol, the network management function entity may allocate a corresponding quantity of addresses to each interface based on the quantity of addresses.

For the case 1.2, if the quantity of addresses allocated to each interface is indicated in the first message, the network management function entity may allocate a corresponding quantity of addresses to each interface based on the preset quantity indicated in the first message. In this case, the address information indicates the preset quantity of addresses.

Allocation of the preset quantity of addresses to each interface in the interface of the at least one interface type by the network management function entity in different cases is described above. It may be understood that the second message may further indicate validity duration. The validity duration may be duration for which the address indicated by the address information is allowed to be used, that is, the validity duration may be duration in which each interface in the interface of the at least one interface type can use the allocated address. The validity duration may be at an hour level, a minute level, a second level, or the like. This may be specifically set based on an actual situation. In addition, each address allocated by the network management function entity to each interface in the interface of the at least one interface type corresponds to validity duration, to indicate, by using the validity duration, duration for which the address is allowed to be used. Validity duration corresponding to all the addresses may be the same, for example, 20 hours (h), or may be different. This may be specifically set based on an actual situation.

The second message may further include information indicating the validity duration, for example, a specific value of the validity duration. In this case, the validity duration may be represented by using an integer or preset information indicating the validity duration. It may be understood that the "validity duration" in this embodiment of this application is merely an example expression form, and the "validity duration" may be replaced with any possible expression form, for example, "lease duration" or "use duration". This is not limited.

The second message is described above. It may be understood that when the network management function entity is a DHCPv4 server, a DHCP offer (OFFER) message may be reused for the second message. Alternatively, when the network management function entity is a DHCPv6 server, a DHCP advertise (ADVERTISE) message may be reused for the second message. In this case, a DHCP option (option) definition may be newly added, for example, an interface type address allocation option, an IP domain name option of an IP address, a VPN option of an IP address, and an NF ID option. For the interface type address allocation option and the NF ID option, refer to the related descriptions of "S601". Details are not described herein. The IP domain name option of the IP address may include information elements such as an option code, an option length, and an IP domain (IP domain) name. For specific information of the information elements, refer to Table 4. The VPN option of the IP address may include information elements such as an option code, an option length, and a VPN. For specific information of the information elements, refer to Table 5.

**Table 4**

| Key information element | Type | Description |
|---|---|---|
| Option code | Integer, 2 bytes | Defined based on the current DHCP standard format, with a value allocated and managed by the IANA |
| Option length | 2 bytes | Indicates a field length of the IP domain name option of the IP address, and follows the DHCP standard format |
| IP domain name | String, variable length | Indicates an IP domain name of an interface |

**Table 5**

| Key information element | Type | Description |
|---|---|---|
| Option code | Integer, 2 bytes | Defined based on the current |
| | | DHCP standard format, with a value allocated and managed by the IANA |
| Option length | 2 bytes | Indicates a field length of the VPN option of the IP address, and follows the DHCP standard format |
| VPN | String, variable length | Indicates a VPN of an interface |

After the interface type address allocation option, the IP domain name option of the IP address, the VPN option of the IP address, the NF ID option, and the like are newly added, the newly added interface type address allocation option may indicate the at least one interface type, the NF ID option may indicate the first network function, and the IP domain name option or the VPN option of the IP address may indicate a network in which the IP address is located. That is, the DHCP offer message may include at least one of the following: the interface type address allocation option, the IP domain name option of the IP address (or the VPN option of the IP address), the NF ID option, or the IP address. The DHCP advertise message may include at least one of the following: the interface type address allocation option, the IP domain name option of the IP address (or the VPN option of the IP address), the NF ID option, or the IP address. It may be understood that the address information may be represented by using the IP domain name option of the IP address (or the VPN option of the IP address) and the IP address.

S603: The service address allocation proxy function entity sends the address information to a service interface automation system. Correspondingly, the service interface automation system receives the address information from the service address allocation proxy function entity.

For the address information, refer to the related descriptions of "S602". Details are not described herein.

When the second message further indicates the validity duration, that the service address allocation proxy function entity sends the address information to the service interface automation system may specifically include: The service address allocation proxy function entity sends the address information and the validity duration to the service interface automation system. Correspondingly, the service interface automation system receives the address information and the validity duration from the service address allocation proxy function entity. That is, in this case, the validity duration may be sent to the service interface automation system, so that the service interface automation system can determine, based on the validity duration, to perform corresponding processing when the address of the interface is about to expire, for example, request to continue to allocate the address to the interface.

It may be understood that the service address allocation proxy function entity may further send, to the service interface automation system, information indicating the at least one interface type, and establish a correspondence between each address indicated by the address information and each interface, to ensure that after receiving the address information, the service interface automation system can accurately determine which address is allocated to which interface, thereby avoiding a case such as an address configuration error.

S604: The service interface automation system generates an interface configuration of the first network function based on the address information.

That is, the service interface automation system may generate the interface address configuration of the first network function based on the address information, and store the interface configuration, for example, store the configuration in a persistent medium.

In addition, after the service interface automation system generates the interface address configuration, an interface address host route may be further advertised to a network through dynamic route advertisement, for example, the interface address host route is advertised through BGP advertisement. It may be understood that a physical network port used by a service interface of the first network function is usually a physical network. When the first network function is enabled, an IP address of the physical network port may be dynamically obtained by using an automation mechanism such as NFVI. In addition, after the first network function is enabled, a peer NF address may be obtained through a topology management system to complete service interface interconnection.

In conclusion, in this embodiment of this application, when an address of each interface needs to be obtained, the service address allocation proxy entity may request the network management function entity to allocate an address to the interface of the at least one interface type of the first network function. The network management function entity may allocate an address based on the request, and send allocated address information to the service address allocation proxy entity, so that the service address allocation proxy entity sends the address information to the service interface automation system, and the service interface automation system can perform address configuration based on the address information. In this way, during NF deployment, an interface address can be automatically obtained and configured, and manual address obtaining and configuration can be avoided, thereby improving efficiency of configuring the address information, and implementing NF interface configuration in a distributed network.

Optionally, with reference to the foregoing embodiment, before the service address allocation proxy function entity sends the first message to the network management function entity, the interface address allocation method may further include: The service interface automation system sends a third message to the service address allocation proxy function entity. Correspondingly, the service address allocation proxy function entity receives the third message from the service interface automation system. The third message is used to request to allocate an address to the interface of the at least one interface type of the first network function. That the service address allocation proxy function entity sends the first message to the network management function entity may specifically include: The service address allocation proxy function entity sends the first message to the network management function entity based on the third message. That is, the service interface automation system may send, to the service address allocation proxy, a request for allocating an address to the interface of the at least one interface type, to trigger the service address allocation proxy function entity to request the network management function entity to allocate an address to the interface of the at least one interface type.

The third message may include information indicating the at least one interface type. For details, refer to the foregoing related descriptions. Details are not described herein. It may be understood that the service interface automation system and the service address allocation proxy function entity may be disposed in the first network function. In this case, the third message sent by the service interface automation system to the service address allocation proxy function entity may not carry information indicating the first network function. It may be further understood that when an address needs to be allocated to interfaces of a plurality of interface types, the service interface automation system may request, at a time, to allocate an address to an interface of one interface type, that is, may send the third message a plurality of times; or the service interface automation system may request to allocate an address to the interfaces of the plurality of interface types, that is, may send the third message once.

In addition, for the case 1.2, the third message may be specifically used to request to allocate the preset quantity of addresses to the interface of the at least one interface type. That is, the third message may indicate the quantity of addresses that need to be allocated to each interface in the interface of the at least one interface type. For details, refer to the foregoing related descriptions. Details are not described herein. In this case, the third message may include at least one of the following: information indicating the at least one interface type or information indicating the preset quantity. For details, refer to the foregoing related descriptions. Details are not described herein. That is, when the third message includes the information indicating the at least one interface type and the information indicating the preset quantity, a request may be made to the service address allocation proxy function entity to allocate the preset quantity of addresses to the interface of the at least one interface type.

Optionally, with reference to the foregoing embodiment, after the service interface automation system receives the address information from the service address allocation proxy function entity, the interface address allocation method may further include: When the address indicated by the address information expires, the service address allocation proxy function entity sends a fourth message to the network management function entity. Correspondingly, the network management function entity receives the fourth message from the service address allocation proxy function entity. The fourth message is used to request to continue to allocate the address indicated by the address information to the interface of the at least one interface type of the first network function. The network management function entity allocates the address indicated by the address information to the interface of the at least one interface type of the first network function based on the fourth message.

The fourth message may include at least one of the following: information indicating the first network function, information indicating the interface of the at least one interface type, or the address information. For details, refer to the related descriptions of "S601" and "S602". Details are not described herein.

When the address indicated by the address information is about to expire, for example, when use duration of the address indicated by the address information is about to reach the validity duration of the address, the service address allocation proxy function entity may request the network management function entity to continue to allocate the address indicated by the address information to the interface of the at least one interface type of the first network function. In this way, before the address expires, a request can be made to continue to use the address, to ensure normal service running.

It may be understood that after the network management function entity allocates the address indicated by the address information to the interface of the at least one interface type of the first network function based on the fourth message, the network management function entity may further send, to the service address allocation proxy function entity, a message indicating the address indicated by the allocated address information, so that the service address allocation proxy function entity performs subsequent operations based on the message, for example, an operation of updating the validity duration of the address indicated by the address information. In addition, if the address indicated by the address information allocated to the interface of the at least one interface type of the first network function has been allocated to another interface, the network management function entity may allocate another address, for example, an address #a1, to the interface, and send specific information about the address #a1 to the service address allocation proxy function entity, so that the interface uses the address #a1 after the address indicated by the address information expires. The specific information may include at least one of the following information about the address #a1: an IP address, an IP domain name, a VPN, or validity duration. For the information, refer to the foregoing related descriptions. Details are not described herein.

It may be further understood that when the network management function entity is a DHCPv4 server, a DHCP request (REQUEST) message may be reused for the fourth message. In this case, a DHCP option definition may be newly added, for example, an interface type address allocation option, an IP domain name option of an IP address, a VPN option of an IP address, and an NF ID option. For details, refer to the related descriptions of "S602". Details are not described herein. After the DHCP option definition is newly added, the DHCP request message may include at least one of the following: the interface type address allocation option, the IP domain name option of the IP address (or the VPN option of the IP address), the NF ID option, or the IP address. That is, the NF ID option may indicate a first function entity, and the IP address and the IP domain name option of the IP address (or the VPN option of the IP address) may indicate the address information.

When the network management function entity is a DHCPv6 server, a DHCPv6 renew (RENEW) message may be reused for the fourth message. In this case, a DHCP option definition may be newly added, for example, an interface type address allocation option, an IP domain name option of an IP address, a VPN option of an IP address, and an NF ID option. For details, refer to the related descriptions of "S602". Details are not described herein. After the DHCP option definition is newly added, the DHCPv6 renew message may include at least one of the following: the interface type address allocation option, the IP domain name option of the IP address (or the VPN option of the IP address), the NF ID option, or the IP address. That is, the NF ID option may indicate a first function entity, and the IP address and the IP domain name option of the IP address (or the VPN option of the IP address) may indicate the address information.

Optionally, with reference to the foregoing embodiment, before the network management function entity receives the first message from the service address allocation proxy function entity, the network management function entity may configure an address network segment corresponding to each interface type in the at least one interface type. The address network segment may be an interface address network segment, or may be an interface address network segment and network planning information (denoted as network planning information #2) indicating a network in which the interface address network segment is located. The network planning information #2 may be an IP domain name, a VPN, or other information indicating a network in network planning. For example, the address network segment may be an IP address network segment, or an IP address network segment and an IP domain name, or an IP address network segment and a VPN. For example, when networks include different IP addresses, the address network segment may be an IP address network segment. For another example, when different networks include a same IP address, the address may be an IP address network segment and an IP domain name. Alternatively, the address may be an IP address network segment and a VPN.

A manner in which the network management function entity configures the address network segment may be set based on an actual situation. For example, when an address scale of a deployed network is not determined, when determining that the address network segment corresponding to each interface type in the at least one interface type needs to be used subsequently, the network management function entity may request the address network segment corresponding to each interface type in the at least one interface type from an NF deployment proxy function entity. When the address scale of the deployed network is determined, a topology orchestrator may send all interface types in network planning and an address network segment corresponding to the interface type to the network management function entity for subsequent use by the network management function entity. The following provides descriptions in different cases.

Case 2.1: The address scale of the deployed network is not determined.

In this case, the topology orchestrator may send content of network address planning to a service network management center, for example, an address network segment corresponding to each planned interface. That is, in this case, the message sent by the topology orchestrator to the service network management center may include at least one of the following: information indicating an interface type of a planned interface or address network segment information of a planned interface. In this way, planned network information may be configured in the service network management center, so that the network management function subsequently obtains a required address network segment of an interface from the service network management center.

The topology orchestrator may deploy at least one NF at a specified edge site or data center, and the at least one NF includes the first network function. That is, the topology orchestrator may send at least one of the following information to the NF deployment proxy function entity: information indicating an NF type of the at least one NF, a software image, or an initial configuration. The NF type may be an NF type in 3GPP, for example, an SMF or a UPF, and the NF type includes a type corresponding to the first network function. It may be understood that in a future communication system, there may be another NF type. This is not limited. The software image may be software running on cloud infrastructure of an edge network. For details, refer to the conventional technology. Details are not described herein. The initial configuration may be service function configuration data determined based on different application scenarios. For details, refer to the conventional technology. Details are not described herein.

After the NF is deployed at the specified edge site or data center, the NF deployment proxy function entity may send a message indicating a first interface type to the network management function entity based on the at least one NF deployed by the topology orchestrator, to indicate an NF interface that needs to be supported by the network management function entity. That is, the first interface type is an interface type of each interface that needs to be deployed in the deployed NF, and the first interface type belongs to the interface type of the planned interface. After the network management function entity receives the message indicating information about the first interface type, if there are no sufficient addresses in the network management function entity to allocate an address to an interface of the first interface type, a fifth message may be sent to the service network management center, to request to obtain an address network segment corresponding to the interface of the first interface type.

Specifically, before the network management function entity receives the first message from the service address allocation proxy function entity, the interface address allocation method may further include: The network management function entity sends the fifth message to the service network management center. Correspondingly, the service network management center receives the fifth message from the network management function entity. The fifth message is used to obtain the address network segment corresponding to the interface of the first interface type, the first interface type includes an interface type of an interface determined for deployment, and the at least one interface type of the first network function belongs to the first interface type. The service network management center sends a sixth message to the network management function entity. Correspondingly, the network management function entity receives the sixth message from the service network management center. The sixth message indicates address network segment information corresponding to the interface of the first interface type. That the network management function entity sends the second message to the service address allocation proxy function entity based on the first message may specifically include: The network management function entity sends the second message to the service address allocation proxy function entity based on the first message and the sixth message.

The address network segment information may include at least one interface address network segment, or at least one interface address network segment and second network planning information. The second network planning information may indicate a network in which each interface address network segment in the at least one interface address network segment is located. It may be understood that the second network planning information may include network planning information of all the interface address network segments in the at least one interface address network segment. The network planning information of all the interface address network segments in the at least one interface address network segment may be the same or different. This may be specifically set based on an actual situation. For example, the at least one interface address network segment includes an interface address network segment #b1, an address network segment #b2, and an address network segment #b3, and the second network planning information may include network planning information #b1 corresponding to the address network segment #b1, network planning information #b2 corresponding to the address network segment #b2, and network planning information #b3 corresponding to the address network segment #b3. The second network planning information may be an IP domain name or a VPN, and in other different network planning, for example, in a network in which an IP domain name or VPN planning is not used, the IP domain name and the VPN may be replaced with information indicating the network in the network planning. In addition, information included in the address network segment may be set based on an actual situation. For example, when interface addresses in networks are not duplicated, the address network segment information may be at least one interface address network segment. For another example, when interface addresses in networks are duplicated, the address network segment information may include at least one interface address network segment and the second network planning information.

The fifth message may include information indicating the first interface type. The information indicating the first interface type may be each interface type in the first interface type, or may be information that is preset or predefined in a protocol and that indicates each interface type in the first interface type.

The sixth message may include at least one of the following: information indicating the first interface type or the address network segment information. For details, refer to the foregoing related descriptions. Details are not described herein. It may be understood that an interface of each interface type in the first interface type corresponds to one address network segment.

The network management function entity may obtain the address network segment information corresponding to the interface of the first interface type from the service network management center, and when the service address allocation proxy function entity requests to allocate an address to the interface of the at least one interface type, may allocate an address to the interface of the at least one interface type based on the address network segment information corresponding to the interface of the first interface type and the first message.

It may be understood that if there are sufficient addresses in the network management function entity for use by a to-be-deployed NF, the step of obtaining the address network segment information corresponding to the first interface type does not need to be performed. That is, in this case, the network management function entity may allocate an address to each interface by using a local address.

After the network management function entity receives the sixth message from the service network management center, the interface address allocation method may further include: The network management function entity sends an eighth message to an edge gateway based on the sixth message. Correspondingly, the edge gateway receives the eighth message from the network management function entity. The eighth message is used to request to configure a network segment route corresponding to the address network segment information.

The eighth message may include the address network segment information. For configuration of the network segment route by the edge gateway based on the address network segment information, refer to the conventional technology. Details are not described herein.

Case 2.2: The address scale of the deployed network is determined.

In this case, the topology orchestrator may send related information of all interface types corresponding to a planned network to the network management function entity. Specifically, before the network management function entity receives the first message from the service address allocation proxy function entity, the interface address allocation method may further include: The topology orchestrator sends a seventh message to the network management function entity. Correspondingly, the network management function entity receives the seventh message from the topology orchestrator. The seventh message indicates address network segment information corresponding to an interface of a second interface type, the second interface type includes all interface types corresponding to a planned network, and the at least one interface type of the first network function belongs to the second interface type.

That the network management function entity sends the second message to the service address allocation proxy function entity based on the first message may specifically include: The network management function entity sends the second message to the service address allocation proxy function entity based on the first message and the seventh message.

The second interface type may include at least one interface type, and may be sent to the network management function entity through the topology orchestrator.

The seventh message may include at least one of the following: information indicating the second interface type or an address network segment corresponding to each interface type in the second interface type.

For the address network segment information, refer to the related descriptions of the "case 2.1". Details are not described herein.

In the case 2.2, the topology orchestrator may send related information of all interfaces in network planning to the network management function entity in advance, so that the network management function entity can allocate an address to each interface based on the related information.

After the network management function entity receives the seventh message from the topology orchestrator, the interface address allocation method may further include: The network management function entity sends an eighth message to an edge gateway based on the seventh message. Correspondingly, the edge gateway receives the eighth message from the network management function entity. The eighth message is used to request to configure a network segment route corresponding to the address network segment information.

The eighth message may include the address network segment information. For configuration of the network segment route by the edge gateway based on the address network segment information, refer to the conventional technology. Details are not described herein.

Optionally, with reference to the foregoing embodiment, that the service address allocation proxy function entity sends the address information to the service interface automation system may specifically include: The service address allocation proxy function entity sends the address information to the service interface automation system when determining that the address information is available for use. In this way, it can be ensured that an address configured for each interface in the interface of the at least one interface type is available for use, to ensure normal service running.

The service address allocation proxy function entity may confirm, by sending a request message for confirming whether the address information is available for use to the network management function entity, whether the address information is available for use. Specifically, after the service address allocation proxy function entity receives the second message from the network management function entity, the interface address allocation method may further include: The service address allocation proxy function entity sends a ninth message to the network management function entity. Correspondingly, the network management function entity receives the ninth message from the service address allocation proxy function entity. The ninth message is used to request to determine whether the address information is available for use. The network management function entity sends a tenth message to the service address allocation proxy function entity based on the ninth message. Correspondingly, the service address allocation proxy function entity receives the tenth message from the network management function entity. The tenth message indicates that the address information is available for use.

The ninth message may include at least one of the following: information indicating the first function entity or the address information. For details, refer to the foregoing related descriptions. The tenth message may be an acknowledgment message, and may include information indicating an acknowledgment, for example, an ACK character. That is, after receiving the second message, the service address allocation proxy function entity may confirm, with the network management function entity, whether the address information is available.

It may be understood that when the network management function entity is a DHCPv4 server, a DHCP request message may be reused for the ninth message, and a DHCP ACK message may be reused for the tenth message. In this case, a DHCP option definition may be newly added, for example, an interface type address allocation option, an IP domain name option of an IP address, a VPN option of an IP address, and an NF ID option. For details, refer to the related descriptions of "S602". Details are not described herein. After the DHCP option definition is newly added, the DHCP request message may include at least one of the following: the interface type address allocation option, the IP domain name option of the IP address (or the VPN option of the IP address), the NF ID option, or the IP address. That is, the NF ID option may indicate a first function entity, and the IP address and the IP domain name option of the IP address (or the VPN option of the IP address) may indicate the address information.

When the network management function entity is a DHCPv6 server, a DHCPv6 request message may be reused for the ninth message, and a DHCPv6 reply (REPLY) message may be reused for the tenth message. In this case, a DHCP option definition may be newly added, for example, an interface type address allocation option, an IP domain name option of an IP address, a VPN option of an IP address, and an NF ID option. For details, refer to the related descriptions of "S602". Details are not described herein. After the DHCP option definition is newly added, the DHCPv6 request message may include at least one of the following: the interface type address allocation option, the IP domain name option of the IP address (or the VPN option of the IP address), the NF ID option, or the IP address. That is, the NF ID option may indicate a first function entity, and the IP address and the IP domain name option of the IP address (or the VPN option of the IP address) may indicate the address information.

### Scenario 1:

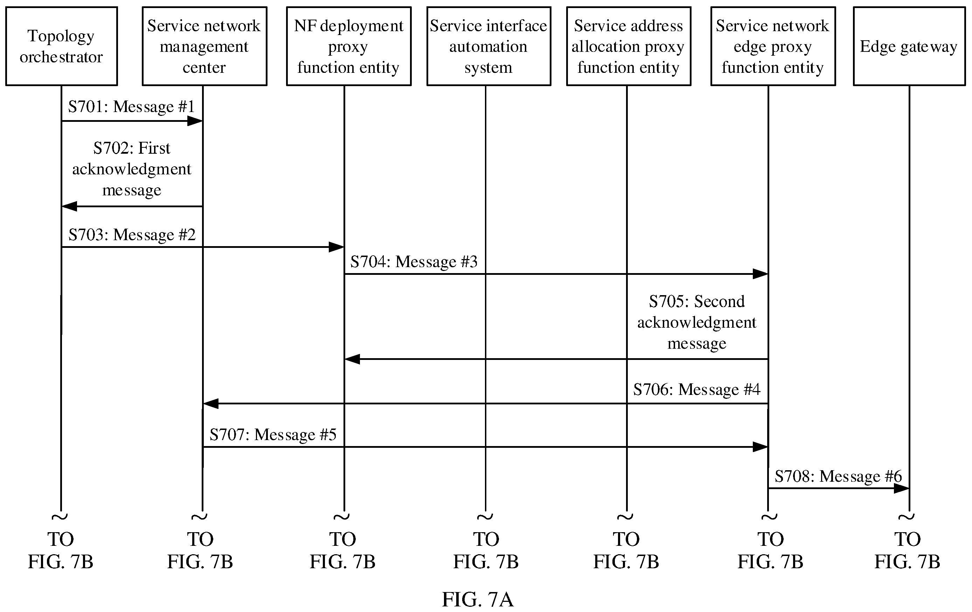

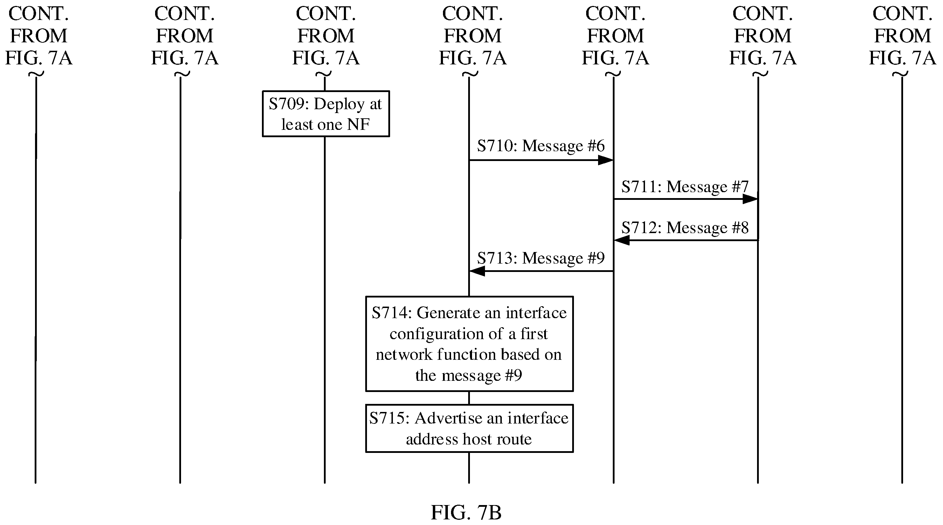

FIG. 7A and FIG. 7B are a schematic flowchart 2 of an interface address allocation method according to an embodiment of this application. The method is applicable to the foregoing communication system, and mainly relates to interaction between a service address allocation proxy function entity and a service network edge proxy function entity. In the scenario 1, when an address scale of a deployed network is not determined, the service address allocation proxy function entity may request a network management function entity to allocate an address to an interface of at least one interface type of a first network function, and the network management function entity may allocate an address to the interface of the at least one interface type of the first network function.

As shown in FIG. 7A and FIG. 7B, a procedure of the interface address allocation method is as follows:
S701: A topology orchestrator sends a message #1 to a service network management center. Correspondingly, the network management center receives the message #1 from the topology orchestrator.

The message #1 may indicate an address network segment of an interface of a first interface type, and the first interface type includes an interface type of an interface determined for deployment. The message #1 may include at least one of the following: information indicating the first interface type or an address network segment of the first interface type. For details, refer to the related descriptions in the embodiment shown in FIG. 6. Details are not described herein.

S702: The service network management center sends a first acknowledgment message to the topology orchestrator based on the message #1. Correspondingly, the topology orchestrator receives the first acknowledgment message from the service network management center.

After receiving the message #1, the service network management center may store related information of network address planning, namely, the address network segment of the interface of the first interface type, and may return the first acknowledgment message.

S703: The topology orchestrator sends a message #2 to an NF deployment proxy function entity. Correspondingly, the NF deployment proxy function entity receives the message #2 from the topology orchestrator.

The message #2 indicates to deploy at least one NF, and the at least one NF includes the first network function. The message #2 may include at least one of the following: information indicating an NF type of the at least one NF, a software image, or an initial configuration. For details, refer to the related descriptions in the embodiment shown in FIG. 6. Details are not described herein.

S704: The NF deployment proxy function entity sends a message #3 to the service network edge proxy function entity. Correspondingly, the service network edge proxy function entity receives the message #3 from the NF deployment proxy function entity.

The message #3 indicates an interface type of an interface of the at least one deployed NF. That is, after the at least one NF is deployed, an address further needs to be allocated to the interface of the at least one NF. In this way, after receiving the message #3, the service network edge proxy function entity may determine whether there are sufficient addresses in the service network edge proxy function entity for allocation. When there are sufficient addresses for allocation, there is no need to request an address network segment of an interface of each interface type from the service network center, that is, a local address may be directly used for allocation. When there are no sufficient addresses for allocation, an address network segment of an interface of each interface type may be requested from the service network center, and the address network segment is used to allocate an address to the interface.

S705: The service network edge proxy function entity sends a second acknowledgment message to the NF deployment proxy function entity based on the message #3. Correspondingly, the service network edge proxy function entity receives the second acknowledgment message from the NF deployment proxy function entity.

That is, the service network edge proxy function entity may notify, by using the second acknowledgment message, the NF deployment proxy function entity that the message #3 is received.

S706: The service network edge proxy function entity sends a message #4 to the service network management center. Correspondingly, the service network management center receives the message #4 from the service network edge proxy function entity.

The message #4 may be the fifth message in the embodiment shown in FIG. 6. For specific implementation of S706, refer to the related descriptions in the embodiment shown in FIG. 6. Details are not described herein.

S707: The service network management center sends a message #5 to the service network edge proxy function entity based on the message #4. Correspondingly, the service network edge proxy function entity receives the message #5 from the service network management center.

The message #5 may be the sixth message in the embodiment shown in FIG. 6. For specific implementation of S707, refer to the related descriptions in the embodiment shown in FIG. 6. Details are not described herein.

S708: The service network edge proxy function entity sends a message #6 to an edge gateway based on the message #5. Correspondingly, the edge gateway receives the message #5 from the service network edge proxy function entity.

The message #6 may be the eighth message in the embodiment shown in FIG. 6. For specific implementation of S708, refer to the related descriptions in the embodiment shown in FIG. 6. Details are not described herein.

S709: The NF deployment proxy function entity deploys the at least one NF.

That is, the NF deployment proxy function entity may complete operations such as deployment of related resources (for example, a virtual machine, a central processing unit (central processing unit, CPU), a memory, a disk, and network bandwidth) of the at least one NF, loading of a software image, and starting of NF software. For details, refer to the conventional technology. Details are not described herein.

S710: A service interface automation system sends a message #6 to the service address allocation proxy function entity. Correspondingly, the service address allocation proxy function entity receives the message #6 from the service interface automation system.

The message #6 may be the third message in the embodiment shown in FIG. 6. For specific implementation of S710, refer to the related descriptions in the embodiment shown in FIG. 6. Details are not described herein.

S711: The service address allocation proxy function entity sends a message #7 to the service network edge proxy function entity based on the message #6. Correspondingly, the service network edge proxy function entity receives the message #7 from the service address allocation proxy function entity.

The message #7 may be the first message in the embodiment shown in FIG. 6. For specific implementation of S711, refer to the related descriptions of "S601". Details are not described herein.

S712: The service network edge proxy function entity sends a message #8 to the service address allocation proxy function entity based on the message #7. Correspondingly, the service address allocation proxy function entity receives the message #8 from the service network edge proxy function entity.

The message #8 may be the second message in the embodiment shown in FIG. 6. For specific implementation of S712, refer to the related descriptions of "S602". Details are not described herein.

S713: The service address allocation proxy function entity sends a message #9 to the service interface automation system based on the message #8. Correspondingly, the service interface automation system receives the message #9 from the service address allocation proxy function entity.

The message #9 may indicate address information of the interface of the at least one interface type. For specific implementation of S713, refer to the related descriptions of "S603". Details are not described herein.

S714: The service interface automation system generates an interface configuration of the first network function based on the message #9.

For specific implementation of S714, refer to the related descriptions of "S604". Details are not described herein.

S715: The service interface automation system advertises an interface address host route.

For specific implementation of S715, refer to the related descriptions in the embodiment shown in FIG. 6. Details are not described herein.

It may be understood that for specific implementation of S701 to S715, refer to the related descriptions in the embodiment shown in FIG. 6. Details are not described herein. In this case, the service network edge proxy function entity in the scenario 1 may be the network management function entity in the embodiment shown in FIG. 6.

### Scenario 2:

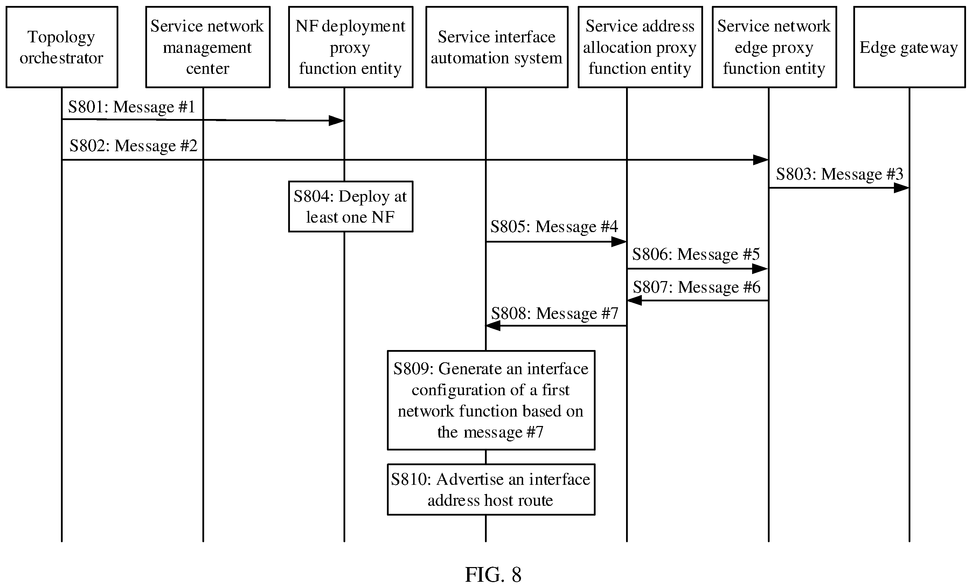

FIG. 8 is a schematic flowchart 3 of an interface address allocation method according to an embodiment of this application. The method is applicable to the foregoing communication system, and mainly relates to interaction between a service address allocation proxy function entity and a service network edge proxy function entity. In the scenario 2, when an address scale of a deployed network is determined, the service address allocation proxy function entity may request a network management function entity to allocate an address to an interface of at least one interface type of a first network function, and the network management function entity may allocate an address to the interface of the at least one interface type of the first network function.

As shown in FIG. 8, a procedure of the interface address allocation method is as follows:

S801: A topology orchestrator sends a message #1 to an NF deployment proxy function entity. Correspondingly, the NF deployment proxy function entity receives the message #1 from the topology orchestrator.

The message #1 indicates to deploy at least one NF, and the at least one NF includes the first network function. The message #1 may include at least one of the following: information indicating an NF type of the at least one NF, a software image, or an initial configuration. For details, refer to the related descriptions in the embodiment shown in FIG. 6. Details are not described herein.

S802: The topology orchestrator sends a message #2 to the service network edge proxy function entity. Correspondingly, the service network edge proxy function entity receives the message #2 from the topology orchestrator.

The message #2 may be the seventh message in the embodiment shown in FIG. 6. For specific implementation of S802, refer to the related descriptions in the embodiment shown in FIG. 6. Details are not described herein.

S803: The service network edge proxy function entity sends a message #3 to an edge gateway based on the message #2. Correspondingly, the edge gateway receives the message #3 from the service network edge proxy function entity.

The message #3 may be the eighth message in the embodiment shown in FIG. 6. For specific implementation of S803, refer to the related descriptions in the embodiment shown in FIG. 6. Details are not described herein.

S804: The NF deployment proxy function entity deploys the at least one NF.

For S804, refer to the related descriptions of "S709". Details are not described herein.

S805: A service interface automation system sends a message #4 to the service address allocation proxy function entity. Correspondingly, the service address allocation proxy function entity receives the message #4 from the service interface automation system.

The message #4 may be the third message in the embodiment shown in FIG. 6. For specific implementation of S805, refer to the related descriptions in the embodiment shown in FIG. 6. Details are not described herein.

S806: The service address allocation proxy function entity sends a message #5 to the service network edge proxy function entity based on the message #4. Correspondingly, the service network edge proxy function entity receives the message #5 from the service address allocation proxy function entity.

The message #5 may be the first message in the embodiment shown in FIG. 6. For specific implementation of S806, refer to the related descriptions of "S601". Details are not described herein.

S807: The service network edge proxy function entity sends a message #6 to the service address allocation proxy function entity based on the message #5. Correspondingly, the service address allocation proxy function entity receives the message #6 from the service network edge proxy function entity.

The message #6 may be the second message in the embodiment shown in FIG. 6. For specific implementation of S807, refer to the related descriptions of "S602". Details are not described herein.

S808: The service address allocation proxy function entity sends a message #7 to the service interface automation system based on the message #6. Correspondingly, the service interface automation system receives the message #7 from the service address allocation proxy function entity.

The message #7 may indicate address information of the interface of the at least one interface type. For specific implementation of S808, refer to the related descriptions of "S603". Details are not described herein.

S809: The service interface automation system generates an interface configuration of the first network function based on the message #7.

For specific implementation of S809, refer to the related descriptions of "S604". Details are not described herein.

S810: The service interface automation system advertises an interface address host route.

For specific implementation of S810, refer to the related descriptions in the embodiment shown in FIG. 6. Details are not described herein.

It may be understood that for specific implementation of S801 to S810, refer to the related descriptions in the embodiment shown in FIG. 6. Details are not described herein. In this case, the service network edge proxy function entity in the scenario 2 is the network management function entity in the embodiment shown in FIG. 6.

### Scenario 3:

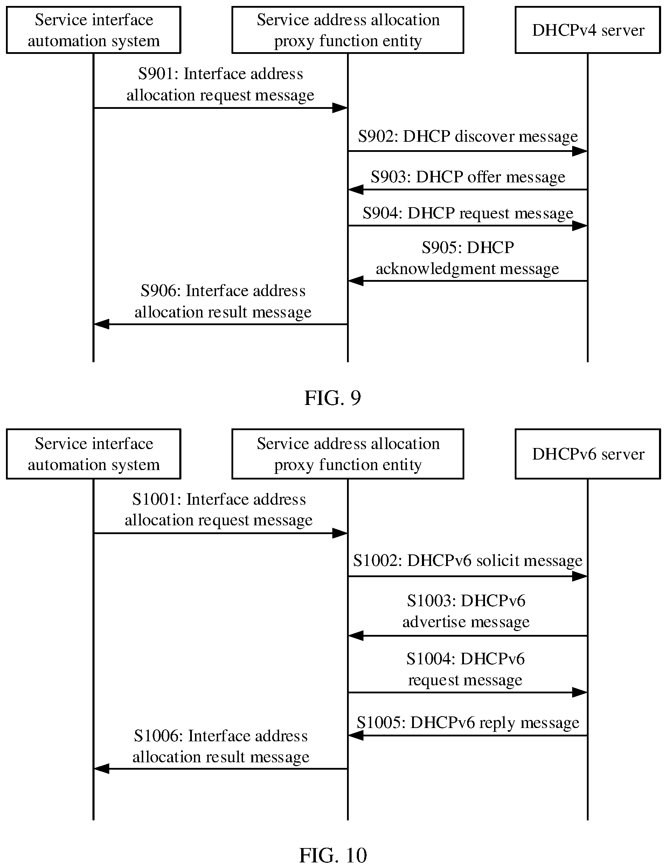

FIG. 9 is a schematic flowchart 4 of an interface address allocation method according to an embodiment of this application. The method is applicable to the foregoing communication system, and mainly relates to interaction between a service address allocation proxy function entity and a DHCPv4 server. In the scenario 3, the service address allocation proxy function entity may request the DHCPv4 server to allocate an address to an interface of at least one interface type of a first network function, and the DHCPv4 server may allocate an address to the interface of the at least one interface type of the first network function based on the request.

As shown in FIG. 9, a procedure of the interface address allocation method is as follows:

S901: A service interface automation system sends an interface address allocation request message to the service address allocation proxy function entity. Correspondingly, the service address allocation proxy function entity receives the interface address allocation request message from the service interface automation system.

The interface address allocation request message may be the third message in the embodiment shown in FIG. 6. For specific implementation of S901, refer to the related descriptions in the embodiment shown in FIG. 6. Details are not described herein.

S902: The service address allocation proxy function entity sends a DHCP discover message to the DHCPv4 server based on the interface address allocation request message. Correspondingly, the DHCPv4 server receives the DHCP discover message from the service address allocation proxy function entity.

S903: The DHCPv4 server sends a DHCP offer message to the service address allocation proxy function entity based on the DHCP discover message. Correspondingly, the service address allocation proxy function entity receives the DHCP offer message from the DHCPv4 server.

S904: The service address allocation proxy function entity sends a DHCP request message to the DHCPv4 server based on the DHCP offer message. Correspondingly, the DHCPv4 server receives the DHCP request message from the service address allocation proxy function entity.

S905: The DHCPv4 server sends a DHCP acknowledgment message to the service address allocation proxy function entity based on the DHCP request message. Correspondingly, the service address allocation proxy function entity receives the DHCP acknowledgment message from the DHCPv4 server.

S906: The service address allocation proxy function entity sends an interface address allocation result message to the service interface automation system based on the DHCP offer message and the DHCP acknowledgment message. Correspondingly, the service interface automation system receives the interface address allocation result message from the service address allocation proxy function entity.

The interface address allocation result message may indicate address information of the interface of the at least one interface type. For specific implementation of S906, refer to the related descriptions of "S603". Details are not described herein.

It may be understood that for specific implementation of S901 to S906, refer to the related descriptions in the embodiment shown in FIG. 6. Details are not described herein. In this case, the DHCPv4 server in the scenario 3 is the network management function entity in the embodiment shown in FIG. 6.

### Scenario 4:

FIG. 10 is a schematic flowchart 5 of an interface address allocation method according to an embodiment of this application. The method is applicable to the foregoing communication system, and mainly relates to interaction between a service address allocation proxy function entity and a DHCPv6 server. In the scenario 4, the service address allocation proxy function entity may request the DHCPv6 server to allocate an address to an interface of at least one interface type of a first network function, and the DHCPv6 server may allocate an address to the interface of the at least one interface type of the first network function based on the request.

As shown in FIG. 10, a procedure of the interface address allocation method is as follows:
S1001: A service interface automation system sends an interface address allocation request message to the service address allocation proxy function entity. Correspondingly, the service address allocation proxy function entity receives the interface address allocation request message from the service interface automation system.

The interface address allocation request message may be the third message in the embodiment shown in FIG. 6. For specific implementation of S1001, refer to the related descriptions in the embodiment shown in FIG. 6. Details are not described herein.

S1002: The service address allocation proxy function entity sends a DHCPv6 solicit message to the DHCPv6 server based on the interface address allocation request message. Correspondingly, the DHCPv6 server receives the DHCPv6 solicit message from the service address allocation proxy function entity.

S1003: The DHCPv6 server sends a DHCPv6 advertise message to the service address allocation proxy function entity based on the DHCPv6 solicit message. Correspondingly, the service address allocation proxy function entity receives the DHCPv6 advertise message from the DHCPv6 server.

S1004: The service address allocation proxy function entity sends a DHCPv6 request message to the DHCPv6 server based on the DHCPv6 advertise message. Correspondingly, the DHCPv6 server receives the DHCPv6 request message from the service address allocation proxy function entity.

S1005: The DHCPv6 server sends a DHCPv6 reply message to the service address allocation proxy function entity based on the DHCPv6 request message. Correspondingly, the service address allocation proxy function entity receives the DHCPv6 reply message from the DHCPv6 server.

S1006: The service address allocation proxy function entity sends an interface address allocation result message to the service interface automation system based on the DHCPv6 reply message and the DHCPv6 advertise message. Correspondingly, the service interface automation system receives the interface address allocation result message from the service address allocation proxy function entity.

The interface address allocation result message may indicate address information of the interface of the at least one interface type. For specific implementation of S1006, refer to the related descriptions of "S603". Details are not described herein.

It may be understood that for specific implementation of S1001 to S1006, refer to the related descriptions in the embodiment shown in FIG. 6. Details are not described herein. In this case, the DHCPv6 server in the scenario 4 is the network management function entity in the embodiment shown in FIG. 6.

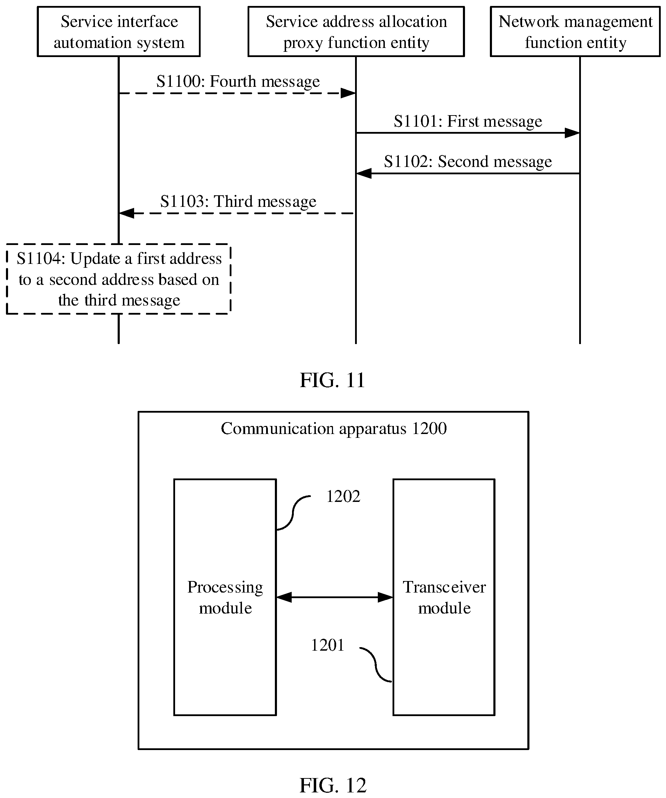

FIG. 11 is a schematic flowchart 6 of an interface address allocation method according to an embodiment of this application. The method is applicable to interaction between the service address allocation proxy function entity and the network management function entity in the foregoing communication system.

As shown in FIG. 11, a procedure of the interface address allocation method is as follows:
S1101: The service address allocation proxy function entity sends a first message to the network management function entity. Correspondingly, the network management function entity receives the first message from the service address allocation proxy function entity.

The first message may be used to request to continue to use a first address allocated to an interface of a first interface type of a first network function. In addition, the first message may be referred to as a renewal message.

The first interface type may include at least one interface type, and may be at least one interface type in 3GPP, for example, at least one interface type in an N2 interface, an N4 interface, an SBI interface, an N3 interface, an N9 interface, an S11 interface, an S5 interface, or an S8 interface, or may be at least one interface type in a future communication system.

The first address may be an address that has been allocated to the interface of the first interface type, that is, the interface of the first interface type may be determined by using the first address. The first address may include at least one interface address, for example, at least one IP address, or may include at least one interface address and first network planning information indicating a network in which the at least one interface address is located. It may be understood that the first network planning information may include network planning information corresponding to all interface addresses in the at least one interface address. The network planning information corresponding to all the interface addresses in the at least one interface address may be the same or different. This may be specifically set based on an actual situation. For example, the at least one interface address includes an interface address #c1 and an interface address #c2, and the first network planning information may include network planning information #c1 corresponding to the interface address #c1 and network planning information #c2 corresponding to the interface address #c2. The first network planning information may be an IP domain name, a VPN, or other information indicating a network in network planning. For example, the first address may be at least one IP address, or at least one IP address and an IP domain name, or at least one IP address and a VPN. This may be specifically determined based on an actual situation. For example, when networks include different IP addresses, the first address may be at least one IP address. For another example, when different networks include a same IP address, the first address may be at least one IP address and an IP domain name. Alternatively, the first address may be at least one IP address and a VPN.

The first message may include at least one of the following: information indicating the first network function, information indicating the first interface type, or information indicating the first address. For the information indicating the first network function, refer to the related descriptions of "S601". Details are not described herein. The information indicating the first interface type may be each interface type included in the first interface type, for example, the N2 interface or the N4 interface, or may be information that is preset or predefined in a protocol and that indicates each interface type in the first interface type. The information indicating the first address may include the at least one interface address and/or the first network planning information, or may be information that is preset or predefined in a protocol and that indicates the first address.

The service address allocation proxy function entity sends the first message to the network management function entity, to request the network management function entity to allocate the first address to the interface of the first interface type of the first network function, that is, continue to renew the first address.

S1102: The network management function entity sends a second message to the service address allocation proxy function entity based on the first message. Correspondingly, the service address allocation proxy function entity receives the second message from the network management function entity.

The second message is used to allocate a second address to the interface of the first interface type. The second address may be the same as or different from the first address. For example, when the first address is available, the network management function entity may allocate the first address to the interface of the first interface type of the first network function, or when the first address has been allocated to another interface, the network management function entity may allocate the second address, namely, an address other than the first address, to the interface of the first interface type of the first network function. It may be understood that the second address may include at least one interface address, and a quantity of interface addresses included in the second address is the same as a quantity of interface addresses included in the first address.

The second message may include at least one of the following: information indicating the first network function, information indicating the first interface type, or information indicating the second address. For the information indicating the first network function and the information indicating the first interface type, refer to the related descriptions of "S1101". Details are not described herein. The information indicating the second address may be a second interface address and/or second network planning information. The second interface address is similar to the first interface address, and the two addresses may be the same or different. For the second interface address, refer to the related descriptions of the first interface address. Details are not described herein. The second network planning information is similar to the first network planning information, and the two pieces of information may be the same or different. For the second network planning information, refer to the related descriptions of the first network planning information. Details are not described herein. Alternatively, the information indicating the second address may be information that is preset or predefined in a protocol and that indicates the second address.

After receiving the first message, the network management function entity may determine whether the first address is available, that is, the first address is not allocated to another interface. If the first address is available, the network management function entity may continue to allocate the first address to the interface of the first interface type of the first network function. That is, in this case, the renewal succeeds. If the first address is unavailable, the network management function entity may allocate another address, for example, the second address, to the interface of the first interface type of the first network function. That is, in this case, the renewal fails.

The second message may further indicate validity duration, and the validity duration is duration for which the second address is allowed to be used. That is, the validity duration may be duration in which the interface of the first interface type of the first network function can use the second address. For the validity duration, refer to the related descriptions of "S602". Details are not described herein. In this case, the second message may further include information indicating the validity duration, for example, a specific value of the validity duration, or preset information indicating the validity duration. It may be understood that the "validity duration" in this embodiment of this application is merely an example expression form, and the "validity duration" may be replaced with any possible expression form, for example, "lease duration" or "use duration". This is not limited.

In conclusion, in this embodiment of this application, when the first address is about to expire, the service address allocation proxy function entity may send, to the network management function entity, a message for requesting to continue to use the first address allocated to the interface of the first interface type of the first network function, to allocate the second address to the interface, so as to avoid a case in which a service error occurs because the first network function cannot use the first address after the first address expires.

It may be understood that if the network management function entity does not receive the first message after use duration of the first address reaches validity duration of the first address, the network management function entity may release the first address.

Optionally, with reference to the foregoing embodiment, after receiving the second message from the network management function entity, the service address allocation proxy entity may determine whether the second address indicated by the second message is the same as the first address. If the second address is different from the first address, it may be considered that the network management function entity reallocates an address to the interface of the first interface type of the first network function. In this case, the service address allocation proxy entity may notify a service interface automation system to perform interface address updating, that is, update an address of the interface of the first interface type of the first network function to the second address.

Specifically, after the service address allocation proxy function entity receives the second message from the network management function entity, the interface address allocation method may further include: The service address allocation proxy function entity sends a third message to the service interface automation system. Correspondingly, the service interface automation system receives the third message from the service address allocation proxy function entity (S1103 in FIG. 11). The third message is used to request to update the first address corresponding to the interface of the first interface type of the first network function to the second address. The service interface automation system updates the first address to the second address based on the third message (S1104 in FIG. 11).

The third message may include at least one of the following: information indicating the first interface type, information indicating the first address, or information indicating the second address. For details, refer to the foregoing related descriptions. Details are not described herein.

It may be understood that after the address of the interface of the first interface type of the first network function changes, the service interface automation system may reconfigure the address (namely, the second address) of the interface, and may further trigger a link establishment procedure with a peer device, that is, reestablish an interface link with the peer device.

Optionally, with reference to the foregoing embodiment, the service address allocation proxy function entity may send the first message to the network management function entity when the first address expires. "When the first address expires" may be understood "when the first address is about to expire", for example, when the use duration of the first address is about to reach the validity duration of the first address. There are a plurality of manners of determining, by the service address allocation proxy function entity, a time point for sending the first message. For example, the service address allocation proxy function entity may start a timer when the first address starts to be used, and send the first message to the network management function entity when a time of the timer is about to reach a validity time of the first address. For another example, a time point at which the first address is about to expire may be calculated based on a validity time of the first address, and the first message is sent to the network management function entity at the time point. A manner of determining, by the service address allocation proxy function entity, the time point for sending the first message may be determined based on an actual situation. This is not limited in this embodiment of this application.

Optionally, with reference to the foregoing embodiment, the service address allocation proxy function entity may send the first message to the network management function entity when receiving a message that is sent by the service interface automation system and that is for requesting to obtain the first address.

Specifically, before the service address allocation proxy function entity sends the first message to the network management function entity, the interface address allocation method may further include: The service interface automation system sends a fourth message to the service address allocation proxy function entity. Correspondingly, the service address allocation proxy function entity receives the fourth message from the service interface automation system (S1100 in FIG. 11). The fourth message is used to request to allocate the first address. That the service address allocation proxy function entity sends the first message to the network management function entity includes: The service address allocation proxy function entity sends the first message to the network management function entity based on the fourth message.

The fourth message may include at least one of the following: information indicating the first interface type or information indicating the first address. For details, refer to the foregoing related descriptions. Details are not described herein.

It may be understood that after the first network function is re-enabled, for example, after the first network function is re-enabled due to a fault, the interface address needs to remain unchanged. In this case, the service interface automation system may read configuration information from a location (for example, a persistent medium) at which configuration data is stored, where the configuration information may include information such as the address of the interface of the first interface type being the first address; and send the fourth message to the service address allocation proxy function entity, to request allocation of the first address. After receiving the fourth message, the service address allocation proxy function entity may request, based on the fourth message, the network management function entity to continue to allocate the first address to the interface of the first interface type of the first network function. In this way, an available address can be provided to the interface of the first interface type of the first network function after the first network function is re-enabled, to avoid a service error caused by an unavailable address.

In addition, the embodiment shown in FIG. 6 and the embodiment shown in FIG. 11 may be used in combination. For example, an address is first allocated to the interface of the at least one interface type, and when the address is about to expire, a request for continuing to use the address is made. This may be specifically set based on an actual situation, and is not limited.

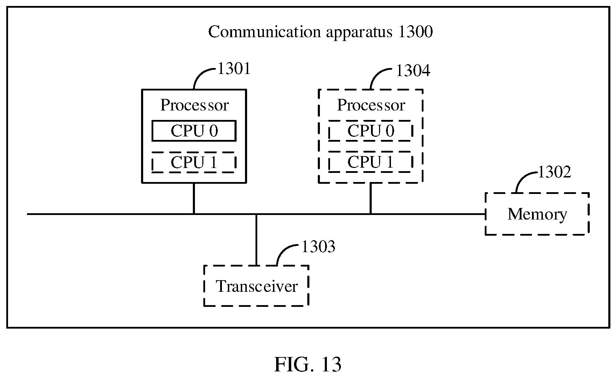

The interface address allocation method provided in embodiments of this application is described in detail above with reference to FIG. 6 to FIG. 11. With reference to FIG. 12 and FIG. 13, the following describes in detail a communication apparatus configured to perform the interface address allocation method provided in embodiments of this application.

FIG. 12 is a diagram 1 of a structure of a communication apparatus according to an embodiment of this application. For example, as shown in FIG. 12, the communication apparatus 1200 includes a transceiver module 1201 and a processing module 1202. For ease of descriptions, FIG. 12 shows only main parts of the communication apparatus.

The transceiver module 1201 is configured to perform receiving and sending functions in the methods shown in FIG. 6 to FIG. 11, and the processing module 1202 is configured to perform a function other than the receiving and sending functions in the methods shown in FIG. 6 to FIG. 11.

Optionally, the transceiver module 1201 may include a sending module (not shown in FIG. 12) and a receiving module (not shown in FIG. 12). The sending module is configured to implement a sending function of the communication apparatus 1200, and the receiving module is configured to implement a receiving function of the communication apparatus 1200.

Optionally, the communication apparatus 1200 may further include a storage module (not shown in FIG. 12). The storage module stores a program or instructions. When the processing module 1202 executes the program or the instructions, the communication apparatus 1200 is enabled to perform a function of a network device (for example, the service address allocation proxy function entity or the network management function entity) in the methods shown in FIG. 6 to FIG. 11.

It may be understood that the communication apparatus 1200 may be a network device, may be a chip (system) or another part or component that may be disposed in the network device, or may be an apparatus including the network device. This is not limited in this application.

In addition, for technical effects of the communication apparatus 1200, refer to the technical effects of the interface address allocation methods shown in FIG. 6 to FIG. 11. Details are not described herein.

FIG. 13 is a diagram 2 of a structure of a communication apparatus according to an embodiment of this application. For example, the communication apparatus may be a network device, or may be a chip (system) or another part or component that may be disposed in the network device. As shown in FIG. 13, the communication apparatus 1300 may include a processor 1301. Optionally, the communication apparatus 1300 may further include a memory 1302 and/or a transceiver 1303. The processor 1301 is coupled to the memory 1302 and the transceiver 1303, for example, may be connected through a communication bus.

The following describes each part of the communication apparatus 1300 in detail with reference to FIG. 13.

The processor 1301 is a control center of the communication apparatus 1300, and may be one processor, or may be a general term of a plurality of processing elements. For example, the processor 1301 is one or more CPUs, may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1301 may perform various functions of the communication apparatus 1300 by running or executing a software program stored in the memory 1302 and invoking data stored in the memory 1302, for example, perform the interface address allocation methods shown in FIG. 6 to FIG. 11.

In specific implementation, in an embodiment, the processor 1301 may include one or more CPUs, for example, a CPU 0 and a CPU 1 shown in FIG. 13.

In specific implementation, in an embodiment, the communication apparatus 1300 may alternatively include a plurality of processors, for example, the processor 1301 and a processor 1304 shown in FIG. 13. Each of the processors may be a single-core processor (single-CPU), or may be a multi-core processor (multi-CPU). The processor herein may be one or more devices, circuits, and/or processing cores configured to process data (for example, computer program instructions).

The memory 1302 is configured to store a software program for executing the solutions in this application, and the processor 1301 controls execution. For a specific implementation, refer to the foregoing method embodiments. Details are not described herein.

Optionally, the memory 1302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 1302 may be integrated with the processor 1301, or may exist independently and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal, and the transceiver 1303 may be configured to communicate with a network apparatus or communicate with another terminal apparatus. For another example, the communication apparatus 1300 is a network apparatus, and the transceiver 1303 may be configured to communicate with a terminal or communicate with another network apparatus.

Optionally, the transceiver 1303 may include a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently and is coupled to the processor 1301 through an interface circuit (not shown in FIG. 13) of the communication apparatus 1300. This is not specifically limited in this embodiment of this application.

It may be understood that the structure of the communication apparatus 1300 shown in FIG. 13 does not constitute a limitation on the communication apparatus. An actual communication apparatus may include more or fewer parts than those shown in the figure, or a combination of a part of the parts, or a different part arrangement.

In addition, for technical effects of the communication apparatus 1300, refer to the technical effects of the methods in the foregoing method embodiments. Details are not described herein.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (for example, a circuit), firmware, or any combination thereof. When software is used for implementation, all or a part of the foregoing embodiments may be implemented in a form of a computer program product. The computer program product includes one or more computer instructions or computer programs. When the computer instructions or the computer programs are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium that can be accessed by a computer, or a data storage device, for example, a server or a data center, including a set of one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between associated objects, but may also indicate an "and/or" relationship. For details, refer to the context for understanding.

In this application, "at least one" means one or more, and "a plurality of" means two or more. "At least one of the following" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that the example units and algorithm steps described with reference to embodiments disclosed in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and unit described above, refer to a corresponding process in the foregoing method embodiments. Details are not described herein.

In the several embodiments provided in this application, it should be understood that the disclosed system, apparatus, and method may be implemented in other manners. For example, the apparatus embodiment described above is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network apparatus, or the like) to perform all or a part of the steps in the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An interface address allocation method, wherein the method comprises:
sending, by a service address allocation proxy function entity, a first message to a network management function entity, wherein the first message is used to request to allocate an address to an interface of at least one interface type of a first network function;
receiving, by the service address allocation proxy function entity, a second message from the network management function entity, wherein the second message indicates address information of the interface of the at least one interface type; and
sending, by the service address allocation proxy function entity, the address information to a service interface automation system.

2. The method according to claim 1, wherein the method further comprises:
receiving, by the service address allocation proxy function entity, a third message from the service interface automation system, wherein the third message is used to request to allocate an address to the interface of the at least one interface type; and
the sending, by the service address allocation proxy function entity, the first message to the network management function entity comprises:
sending, by the service address allocation proxy function entity, the first message to the network management function entity based on the third message.

3. The method according to claim 1 or 2, wherein the first message is specifically used to request to allocate a preset quantity of addresses to the interface of the at least one interface type of the first network function, and the address information indicates the preset quantity of addresses.

4. The method according to any one of claims 1 to 3, wherein the second message further indicates validity duration, the validity duration is duration for which the address indicated by the address information is allowed to be used, and the sending, by the service address allocation proxy function entity, the address information to the service interface automation system comprises:
sending, by the service address allocation proxy function entity, the address information and the validity duration to the service interface automation system.

5. The method according to any one of claims 1 to 4, wherein the address information comprises at least one interface address and first network planning information, and the first network planning information indicates information about a network in which the at least one interface address is located.

6. The method according to any one of claims 1 to 5, wherein the sending, by the service address allocation proxy function entity, the address information to the service interface automation system comprises:
sending, by the service address allocation proxy function entity, the address information to the service interface automation system when determining that the address information is available for use.

7. The method according to any one of claims 1 to 6, wherein the method further comprises:
when the address indicated by the address information expires, sending, by the service address allocation proxy function entity, a fourth message to the network management function entity, wherein the fourth message is used to request to continue to allocate the address indicated by the address information to the interface of the at least one interface type of the first network function.

8. An interface address allocation method, wherein the method comprises:
receiving, by a network management function entity, a first message from a service address allocation proxy function entity, wherein the first message is used to request to allocate an address to an interface of at least one interface type of a first network function; and
sending, by the network management function entity, a second message to the service address allocation proxy function entity based on the first message, wherein the second message indicates address information of the interface of the at least one interface type.

9. The method according to claim 8, wherein the first message is specifically used to request to allocate a preset quantity of addresses to the interface of the at least one interface type of the first network function, and the address information indicates the preset quantity of addresses.

10. The method according to claim 8 or 9, wherein before the receiving, by the network management function entity, the first message from the service address allocation proxy function entity, the method further comprises:
sending, by the network management function entity, a fifth message to a service network management center, wherein the fifth message is used to obtain an address network segment corresponding to an interface of a first interface type, the first interface type comprises an interface type of an interface determined for deployment, and the at least one interface type of the first network function belongs to the first interface type; and
receiving, by the network management function entity, a sixth message from the service network management center, wherein the sixth message indicates address network segment information corresponding to the interface of the first interface type; and
the sending, by the network management function entity, the second message to the service address allocation proxy function entity based on the first message comprises:
sending, by the network management function entity, the second message to the service address allocation proxy function entity based on the first message and the sixth message.

11. The method according to claim 8 or 9, wherein before the receiving, by the network management function entity, the first message from the service address allocation proxy function entity, the method further comprises:
receiving, by the network management function entity, a seventh message from a topology orchestrator, wherein the seventh message indicates address network segment information corresponding to an interface of a second interface type, the second interface type comprises all interface types corresponding to a planned network, and the at least one interface type of the first network function belongs to the second interface type; and
the sending, by the network management function entity, the second message to the service address allocation proxy function entity based on the first message comprises:
sending, by the network management function entity, the second message to the service address allocation proxy function entity based on the first message and the seventh message.

12. The method according to claim 10 or 11, wherein the method further comprises:
sending, by the network management function entity, an eighth message to an edge gateway based on the sixth message or the seventh message, wherein the eighth message is used to request to configure a network segment route corresponding to the address network segment information.

13. The method according to any one of claims 8 to 12, wherein the address information comprises at least one interface address and first network planning information, and the first network planning information indicates information about a network in which the at least one interface address is located.

14. An interface address allocation method, wherein the method comprises:
receiving, by a service interface automation system, address information from a service address allocation proxy function entity, wherein the address information indicates an address allocated to an interface of at least one interface type of a first network function; and
generating, by the service interface automation system, an interface configuration of the first network function based on the address information.

15. The method according to claim 14, wherein before the receiving, by the service interface automation system, the address information from the service address allocation proxy function entity, the method further comprises:
sending, by the service interface automation system, a third message to the service address allocation proxy function entity, wherein the third message is used to request to allocate an address to the interface of the at least one interface type of the first network function.

16. The method according to claim 15, wherein the third message is specifically used to request to allocate a preset quantity of addresses to the interface of the at least one interface type, and the address information indicates the preset quantity of addresses.

17. The method according to any one of claims 14 to 16, wherein the address information comprises at least one interface address and first network planning information, and the first network planning information indicates information about a network in which the at least one interface address is located.

18. An interface address allocation method, wherein the method comprises:
sending, by a service address allocation proxy function entity, a first message to a network management function entity, and receiving, by the network management function entity, the first message from the service address allocation proxy function entity, wherein the first message is used to request to allocate an address to an interface of at least one interface type of a first network function;
sending, by the network management function entity, a second message to the service address allocation proxy function entity based on the first message, and receiving, by the service address allocation proxy function entity, the second message from the network management function entity, wherein the second message indicates address information of the interface of the at least one interface type;
sending, by the service address allocation proxy function entity, the address information to a service interface automation system, and receiving, by the service interface automation system, the address information from the service address allocation proxy function entity, wherein the address information indicates an address allocated to the interface of the at least one interface type of the first network function; and
generating, by the service interface automation system, an interface configuration of the first network function based on the address information.

19. An interface address allocation method, wherein the method comprises:
sending, by a service address allocation proxy function entity, a first message to a network management function entity, wherein the first message is used to request to continue to use a first address allocated to an interface of a first interface type of a first network function; and
receiving, by the service address allocation proxy function entity, a second message from the network management function entity, wherein the second message is used to allocate a second address to the interface of the first interface type.

20. The method according to claim 19, wherein the first message comprises at least one of the following: information indicating the first network function, information indicating the first interface type, or information indicating the first address.

21. The method according to claim 19 or 20, wherein the second message comprises at least one of the following: information indicating the first network function, information indicating the first interface type, or information indicating the second address.

22. The method according to any one of claims 19 to 21, wherein the second message further indicates validity duration, and the validity duration is duration for which the second address is allowed to be used.

23. The method according to any one of claims 19 to 22, wherein the method further comprises:
sending, by the service address allocation proxy function entity, a third message to a service interface automation system, wherein the third message is used to request to update the first address to the second address.

24. The method according to claim 23, wherein the third message comprises at least one of the following: information indicating the first interface type, information indicating the first address, or information indicating the second address.

25. The method according to any one of claims 19 to 24, wherein before the sending, by the service address allocation proxy function entity, the first message to the network management function entity, the method further comprises:
receiving, by the service address allocation proxy function entity, a fourth message from the service interface automation system, wherein the fourth message is used to request to allocate the first address; and
the sending, by the service address allocation proxy function entity, the first message to the network management function entity comprises:
sending, by the service address allocation proxy function entity, the first message to the network management function entity based on the fourth message.

26. The method according to claim 25, wherein the fourth message comprises at least one of the following: information indicating the first interface type or information indicating the first address.

27. An interface address allocation method, wherein the method comprises:
receiving, by a network management function entity, a first message from a service address allocation proxy function entity, wherein the first message is used to request to continue to use a first address allocated to an interface of a first interface type of a first network function; and
sending, by the network management function entity, a second message to the service address allocation proxy function entity based on the first message, wherein the second message is used to allocate a second address to the interface of the first interface type.

28. The method according to claim 27, wherein the first message comprises at least one of the following: information indicating the first network function, information indicating the first interface type, or information indicating the first address.

29. The method according to claim 27 or 28, wherein the second message comprises at least one of the following: information indicating the first network function, information indicating the first interface type, or information indicating the second address.

30. The method according to any one of claims 27 to 29, wherein the second message further indicates validity duration, and the validity duration is duration for which the second address is allowed to be used.

31. An interface address allocation method, wherein the method comprises:
receiving, by a service interface automation system, a third message from a service address allocation proxy function entity, wherein the third message is used to request to update a first address corresponding to an interface of a first interface type of a first network function to a second address; and
updating, by the service interface automation system, the first address to the second address based on the third message.

32. The method according to claim 31, wherein the third message comprises at least one of the following: information indicating the first interface type, information indicating the first address, or information indicating the second address.

33. The method according to claim 31 or 32, wherein before the receiving, by the service interface automation system, the third message from the service address allocation proxy function entity, the method further comprises:
sending, by the service interface automation system, a fourth message to the service address allocation proxy function entity, wherein the fourth message is used to request to allocate the first address.

34. The method according to claim 33, wherein the fourth message comprises at least one of the following: information indicating the first interface type or information indicating the first address.

35. An interface address allocation method, wherein the method comprises:
sending, by a service address allocation proxy function entity, a first message to a network management function entity, and receiving, by the network management function entity, the first message from the service address allocation proxy function entity, wherein the first message is used to request to continue to use a first address allocated to an interface of a first interface type of a first network function;
sending, by the network management function entity, a second message to the service address allocation proxy function entity based on the first message, and receiving, by the service address allocation proxy function entity, the second message from the network management function entity, wherein the second message is used to allocate a second address to the interface of the first interface type;
sending, by the service address allocation proxy function entity, a third message to a service interface automation system, and receiving, by the service interface automation system, the third message from the service address allocation proxy function entity, wherein the third message is used to request to update the first address to the second address; and
updating, by the service interface automation system, the first address to the second address based on the third message.

36. A communication apparatus, wherein the apparatus comprises a module configured to perform the method according to any one of claims 1 to 17 or a module configured to perform the method according to any one of claims 19 to 34.

37. A communication apparatus, wherein the communication apparatus comprises a processor and a memory, the memory is configured to store computer instructions, and when the processor executes the instructions, the communication apparatus is caused to perform the method according to any one of claims 1 to 17, or the communication apparatus is caused to perform the method according to any one of claims 19 to 34.

38. A communication system, comprising at least one of the following: a service address allocation proxy function entity configured to perform the method according to any one of claims 1 to 7, a network management function entity configured to perform the method according to any one of claims 8 to 13, or a service interface automation system configured to perform the method according to any one of claims 14 to 17.

39. A communication system, comprising at least one of the following: a service address allocation proxy function entity configured to perform the method according to any one of claims 19 to 26, a network management function entity configured to perform the method according to any one of claims 27 to 30, or a service interface automation system configured to perform the method according to any one of claims 31 to 34.

40. A communication chip, wherein the communication chip stores instructions, the communication chip comprises a logic circuit and a communication interface, the logic circuit is configured to execute computer instructions, the communication interface is used by the communication chip to communicate with another apparatus or chip, and when the logic circuit executes the computer instructions, the method according to any one of claims 1 to 17 is implemented, or the method according to any one of claims 19 to 34 is implemented.

41. A computer-readable storage medium, wherein the computer-readable storage medium comprises a computer program or instructions, and when the computer program or the instructions are executed by a computer, the computer is caused to perform the method according to any one of claims 1 to 17, or the computer is caused to perform the method according to any one of claims 19 to 34.

42. A computer program product, wherein the computer program product comprises a computer program or instructions, and when the computer program or the instructions are executed by a communication apparatus, the method according to any one of claims 1 to 17 is performed, or the method according to any one of claims 19 to 34 is performed.
